# EUROPÄISCHE PATENTSCHRIFT

(11) **EP 3 039 945 B1**
(45) Veröffentlichungstag und Bekanntmachung des Hinweises auf die Patenterteilung: **06.12.2017**
(21) Anmeldenummer: 14755694.8
(22) Anmeldetag: 27.08.2014
(51) Int. Cl.: H05B 33/08, B60Q 11/00

(54) **VORRICHTUNG ZUR VERSORGUNG MINDESTENS EINES VERBRAUCHERS MIT ELEKTRISCHER ENERGIE BZW. ZUR BEREITSTELLUNG ELEKTRISCHER LEISTUNG FÜR MINDESTENS EINEN VERBRAUCHER**
DEVICE FOR SUPPLYING AT LEAST ONE CONSUMER WITH ELECTRICAL ENERGY OR FOR PROVIDING ELECTRIC POWER FOR AT LEAST ONE CONSUMER
DISPOSITIF D'ALIMENTATION D'AU MOINS UN CONSOMMATEUR EN ÉNERGIE ÉLECTRIQUE OU DE MISE À DISPOSITION DE PUISSANCE ÉLECTRIQUE POUR AU MOINS UN CONSOMMATEUR

(30) Priorität: 28.08.2013 DE 102013014661; 31.01.2014 EP 14153428; 10.04.2014 EP 14164254
(43) Veröffentlichungstag der Anmeldung: 06.07.2016
(73) Patentinhaber: Elmos Semiconductor Aktiengesellschaft, 44227 Dortmund (DE)
(72) Erfinder: SUDHAUS, Andre, 45665 Recklinghausen (DE)
(74) Vertreter: dompatent von Kreisler Selting Werner - Partnerschaft von Patent- und Rechtsanwälten mbB
(86) Internationale Anmeldenummer: PCT/EP2014/068176
(87) Internationale Veröffentlichungsnummer: WO 2015/028511

(56) Entgegenhaltungen:
- EP-A2- 2 416 623
- WO-A1-2009/035948
- JP-A- S60 107 372
- US-A1- 2003 227 257
- US-A1- 2005 062 445
- US-A1- 2013 049 622

## Beschreibung

### Einleitung und Stand der Technik

Die Erfindung betrifft eine Vorrichtung zur Versorgung mindestens eines Verbrauchers mit elektrischer Energie bzw. zur Bereitstellung elektrischer Leistung für mindestens einen Verbraucher.

Für viele Anwendungen ist eine geregelte elektrische Energieversorgung notwendig. Insbesondere bei der Regelung der Versorgung von LED-Leuchten im Kfz sind besondere Anforderungen zu erfüllen.

Die zu versorgenden LEDs sind in der Regel in Serie, seltener parallel geschaltet und werden typischerweise durch eine Stromquelle versorgt. Diese geregelte Stromquelle wird aus einer Energiequelle, typischerweise dem Bordnetz eines Kfz, gespeist.

Hierbei tritt das Problem auf, dass die Regelung der Stromquelle zu einem erheblichen Leistungsverlust innerhalb der Stromquellenschaltung führt. Dies hat dahingehend Konsequenzen, dass bei einer monolithischen Integration in Form einer integrierten Schaltung (IC) zusätzliche IC-Flächen notwendig werden, um die für den jeweiligen Halbleiter kritische Temperatur nicht zu überschreiten. Gleichzeitig sind ggf. besondere Maßnahmen zur Kühlung im Gehäuse der Stromquelle erforderlich.

In EP-A-2 645 818, bei der es sich um die Veröffentlichung einer europäischen Patentanmeldung handelt, deren Anmeldetag vor dem Prioritätstag dieser PCT-Anmeldung liegt und deren Veröffentlichung erst nach dem Prioritätstag dieser PCT-Patentanmeldung erfolgte, ist eine Treiberschaltung für LED-Reihenschaltungen beschrieben, die durch eine Wechselspannungsquelle (AC-Spannungsquelle) versorgt wird.

EP-A-2 416 623 offenbart eine Vorrichtung zur Versorgung mindestens eines einen ersten Anschluss aufweisenden Verbrauchers mit elektrischer Energie bzw. zur Bereitstellung elektrischer Energie für mindestens einen ersten Anschluss aufweisenden Verbraucher, wobei die Vorrichtung versehen ist mit einer als IC ausgeführten Regelschaltung mit einem Eingang, über den der Regelschaltung elektrische Energie zuführbar ist, und mindesten einem ersten Ausgang und einem zweiten Ausgang, wobei über jeden der beiden Ausgänge ein Verbraucher über seinen ersten Anschluss von der Regelschaltung mit elektrischer Energie versorgbar ist bzw. die Regelschaltung elektrischer Energie für einen Verbraucher zur Verfügung stellt. Außerdem des ICs befindet sich ein externer Wiederstand zur Abgabe von potentieller elektrischer Verlustleistung. Der Sollwert der von der Regelschaltung zu regelnden elektrischen Leistung des Verbrauchers ist vorgebbar, wobei die Aufteilung der elektrischen Energie auf den Verbraucher bzw. der für diesen zur Verfügung zu stellenden elektrischen Leistung auf die mindestens zwei Ausgänge der Regelschaltung von dieser in Abhängig von mindestens einem Aufteilungsparameter steuerbar ist, der der Regelschaltung zuführbar oder der in der Regelschaltung ermittelbar ist.

Weitere LED-Treiberschaltungen zum Teil mit Stromregeleinheiten sind aus EP-A-2 416 623, WO-A-2009/035948, US-A-2013/0049622 und JP-60 107372 bekannt.

### Aufgabe der Erfindung

Es ist die Aufgabe der Erfindung, die aus einer Regelung des LED-Stromes durch die versorgende Stromquelle herrührende Verlustleistung für die Stromquelle selbst zu minimieren, um hierdurch den Aufwand an IC-Fläche und den gehäusetechnischen Aufwand erheblich zu senken.

Diese Aufgabe wird erfindungsgemäß mittels einer Vorrichtung nach Anspruch 1 gelöst. Einzelne Ausgestaltungen der Erfindung sind Gegenstand der Unteransprüche.

### Beschreibung der grundlegenden Erfindung

Der grundlegende Gedanke der Erfindung ist es, nicht nur den Strom zu regeln, sondern auch den Ort zu bestimmen, an dem die Verlustleistung durch die Regelung des Stromes anfällt, und zwar durch einen weiteren, diesen Ort des Entstehens der zusätzlichen Verlustleistung spezifizierenden Regelparameter.

Der Erfindung liegt die Erkenntnis zugrunde, dass im Grunde ein Transistor, der der regelnde Transistor einer Stromquelle ist, im weitesten Sinne wie ein einstellbarer Widerstand betrachtet werden kann. Hat dieser Transistor einen mittleren Widerstandswert, so fällt ein Maximum an Leistung über dem Transistor ab.

Es wurde im Rahmen der Erfindung erkannt, dass daher ein Betriebsbereich definiert werden kann, in dem dieser Transistor durch einen anderen zweiten Transistor ersetzt werden kann, dem ein externer Widerstand nachgeschaltet ist. Dieser zweite Transistor regelt dann den Strom, wobei ein Teil der Regelverlustleistung nicht im zweiten Transistor selbst, sondern im externen Widerstand abfällt. Somit heizt sich die integrierte Schaltung weniger auf, da die Heizleistung ja außerhalb des Gehäuses in dem besagten externen Widerstand anfällt. Wird ein Strom benötigt, der einen Transistorwiderstand unterhalb der Summe aus dem On-Widerstand des zweiten Transistors und dem externem Widerstand erfordert, so übernimmt wieder der erste Transistor die Regelung.

Dieses recht einfache Prinzip lässt sich insofern verallgemeinern, als dass der Strom innerhalb zweier Strompfade durch zwei Parameter jeweils so geregelt wird, dass die Summe der Ströme in den beiden Stromofaden mit einem ersten Parameter korreliert und die Verteilung der Verlustleistung mit einem zweiten zusätzlichen Parameter verknüpft ist. Dies ist der Grundgedanke der Erfindung.

Es versteht sich, dass das Prinzip auch auf mehr als zwei Strompfade angewandt werden kann. In dem Fall kann sowohl zwei- als auch mehrdimensional zwischen den Strompfaden geregelt werden.

Zum wesentlichen erfindungsgemäßen Ansatz sei erwähnt, dass potentielle Verlustleistung, die in der Regelschaltung entstehen kann, über einen externen Widerstand oder anderen Verbraucher in Form von Wärme umgesetzt wird, die dann an die Umgebung abgegeben wird. Damit wird die Regelschaltung, die als IC ausgeführt ist, vor thermischen Überbeanspruchungen geschützt. Hierzu liefert die Regelschaltung an den Verbraucher über mindestens zwei Pfade die vom Verbraucher jeweils "abgerufene" Energie bzw. Leistung aus einer Spannungsquelle, insbesondere einer Gleichspannungsquelle wie z.B. dem Bordnetz eines Kfz. Einer dieser beiden Pfade ist möglichst niederohmig, also im wesentlichen verlustfrei an die Regelschaltung angebunden, nämlich über den oben erwähnten ersten Ausgang der Regelschaltung, während der zweite Leistungsübertragungspfad den externen Widerstand aufweist. Über zwei Reglermodule werden nun diese beiden Leistungspfade entsprechend angesteuert, wobei bis zu einem ersten Grenzwert die elektrische Leistung von der Regelschaltung zum Verbraucher ausschließlich über den ersten Ausgang transportiert wird. In jedem Reglermodul wird auch Verlustleistung in Form von Wärme erzeugt und zwar in einem Umfang, der von der Größe der für den Verbraucher zur Verfügung zu stellenden elektrischen Leistung ist. Je nachdem, in welchem Arbeitspunkt sich der mindestens eine Treiber eines Reglermoduls befindet, erzeugt dieser also mehr oder weniger Wärme. Wenn demnach der Treiber aufgrund eines erhöhten Leistungsbedarfs des Verbrauchers in einem Betriebsbereich gelangen würde, in dem er mehr Verlustleistung erzeugt, die in Form von Wärme das IC beeinträchtigen könnte, wird erfindungsgemäß das nächste Reglermodul zur zusätzlichen Leistungsabgabe an den Verbraucher hinzugeschaltet.

Die Verteilung der zur Verfügung zu stehenden elektrischen Leistung auf die Reglermodule erfolgt in Abhängigkeit von den Aufteilungsparametern.

Der erfindungsgemäße Ansatz ist also konträr zu den im Stand der Technik bekannten Verfahren, bei denen zur Verhinderung einer Überhitzung von Treibertransistoren der Last bzw. einem Verbraucher zuzuführender Strom symmetrisch bzw. gleichförmig auf mehrere Treiber aufgeteilt wird, wie dies beispielsweise in EP-A-2 196 887 beschrieben ist.

Die Erfindung eignet sich insbesondere zur Versorgung mindestens eines elektrischen/elektronischen wie z.B. eines elektromechanischen, elektrooptischen oder elektroakustischen Verbrauchers, insbesondere eines Leuchtmittels wie z.B. eine LED, oder eines Verbrauchers mit einer ggf. parasitären, ohmschen und/oder induktiven und/oder kapazitiven Last, wie sie in elektrischen/elektronischen Gegenständen/Komponenten im Automotive-Bereich und/oder des täglichen Lebens für z.B. Wohn- und/oder Industriegebäude, Accessoire, Transport anzutreffen sind, mit elektrischer Energie. Ein Beispiel für eine ohmsche Last ist z.B. ein Kfz-Zuheizer, bei einer induktiven Last kann es sich z.B. um einen Generator oder Motor, z.B. BLDC, Schrittmotor, Ein- oder Mehrphasenmotor, Hubmagneten handeln, während als Beispiel für eine kapazitive Last z.B. ein Supercap z.B. zur Speicherung elektrischer Energie genannt werden kann.

### Figurenkurzbeschreibung

Die Erfindung wird nachfolgend anhand mehrerer Ausführungsbeispiele sowie unter Bezugnahme auf die Zeichnung näher erläutert. Im Einzelnen zeigen dabei:
- Fig. 1: beispielhafte Grundstruktur einer erfindungsgemäßen Vorrichtung 10 mit einer einzelnen LED-Kette 11 als Verbraucher,
- Fig. 2: beispielhafte Grundstruktur einer erfindungsgemäßen Vorrichtung 10 mit einer einzelnen LED-Kette 11 als Verbraucher und einem ersten Widerstand R₃,
- Fig. 3: beispielhafte Grundstruktur einer erfindungsgemäßen Regelschaltung 10 mit einer einzelnen LED-Kette 11 als Verbraucher und drei An-steuerkanälen und drei Stromquellen IS₃, IS₄, IS₈,
- Fig. 4: beispielhafte Grundstruktur einer erfindungsgemäßen Vorrichtung mit drei LED-Ketten 11_1, 11_2, 11_3 als Verbraucher und drei erfindungsgemäßen Regelschaltungen 10_1, 10_2, 10_3 und einer Fehler-Detektion FD, einem Farbsensor MF und einem Farbregler (FR),
- Fig. 5: zeigt die beispielhafte Veränderung der Leistungsumsetzung in der LED, der Regelschaltung 10 und im Widerstand R₄ mit Veränderung der Betriebsspannung U_{b},
- Fig. 6: zeigt die beispielhafte Veränderung der Leistungsumsetzung in der LED, der Regelschaltung 10 und im Widerstand R₄ mit Veränderung der Betriebsspannung U_{b} bei drei Stromquellen,
- Fign. 7 und 8: Schaltungen alternativer Varianten der Vorrichtung mit lediglich drei Anschlüssen für die Energieversorgung der Regelschaltung und Energieabgabe durch die Regelschaltung an den Verbraucher bzw. vier Leistungsbereitstellungsmodulen,
- Fign. 9 bis 12: verschiedene Beispiele für Schaltungen entsprechend den in den Fign. 1 bis 8 gezeigten, jedoch mit einer ohmschen Last 12 als Verbraucher,
- Fign. 13 bis 16: verschiedene Beispiele für Schaltungen entsprechend den in den Fign. 1 bis 8 gezeigten, jedoch mit einer induktiven Last 13 als Verbraucher und mit einer Freilaufdiode 14 sowie mit einer Überspannungsschutzdiode 15, wobei beide der induktiven Last 13 zugeordnet sind, und
- Fign. 17 bis 20: verschiedene Beispiele für Schaltungen entsprechend den in den Fign. 1 bis 8 gezeigten, jedoch mit einer kapazitiven Last als Verbraucher.

### Beschreibung von Ausführungsbeispielen der Erfindung

Die folgenden Figuren geben nur einige mögliche Konfigurationen einer erfindungsgemäßen Vorrichtung wieder. Die erfindungsgemäßen Möglichkeiten ergeben sich aus der vorangegangenen Beschreibung und den Ansprüchen.

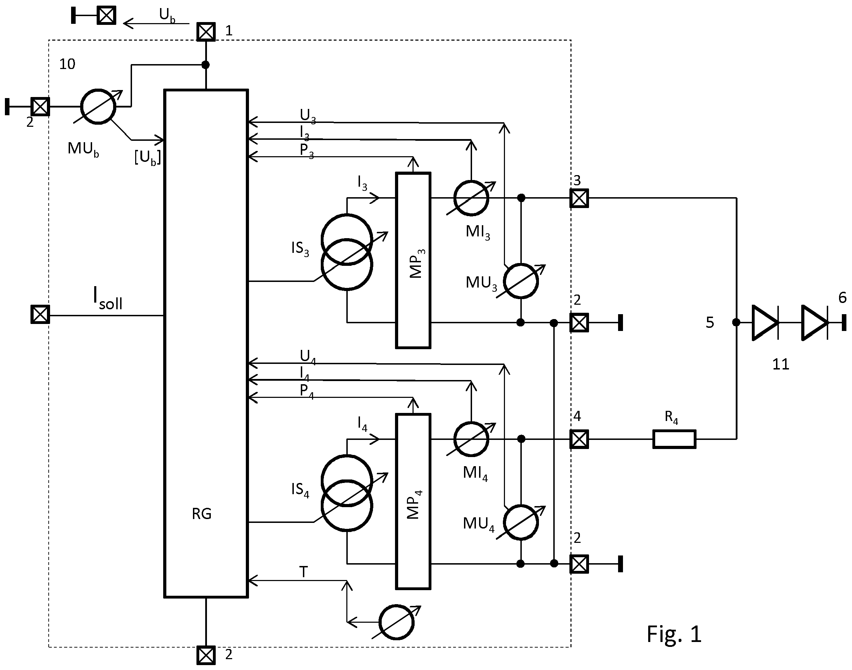

Fig. 1 zeigt eine beispielhafte erfindungsgemäße Regelschaltung 10. Sie weist die beiden Ausgänge 3, 4 auf und für jeden dieser Ausgänge 3, 4 eine zugehörige Stromquelle IS₃, IS₄, die durch einen Regler RG gesteuert wird. Der Strom der ersten Stromquelle IS₃ wird direkt in den ersten Anschluss 5 des Verbrauchers 11, in diesem Fall einer LED-Kette, geleitet. Der Strom der zweiten Stromquelle IS₄ wird über den Widerstand R₄ geleitet und erzeugt dort einen Spannungsabfall. Die Ausgangsspannungen U₃, U₄ werden durch Messvorrichtungen MU₃, MU₄ erfasst und dem Regler RG als Messwert zugeführt. Ebenso werden die Ströme I₃, I₄ durch zwei weitere Messvorrichtungen MI₃, MI₄ erfasst und dem Regler RG ebenfalls als Messwert zugeführt. Die Leistungen P₃, P₄ werden durch Leistungsmessvorrichtungen MP₃, MP₄ erfasst und als Messwert dem Regler RG zugeführt.

Ebenso wird die Betriebsspannung U_{b} durch eine Messvorrichtung MU_{b} erfasst und als Messwert dem Regler RG zugeführt. Nicht alle diese Messwerte sind für eine erfolgreiche Realisierung erforderlich. Hier soll lediglich das Potenzial dargestellt werden. Eine Temperaturmessvorrichtung misst die Temperatur T und stellt diese dem Regler RG zur Verfügung. Der Regler RG steuert mit Hilfe dieser Messwerte und ggf. mit der Hilfe von extern erhaltenen Steuervorgaben, hier ein Sollwert Iₛₒₗₗ, sowie mit ggf. gespeicherten und/oder daraus abgeleiteten Größen die Stromquellen IS₃, IS₄.

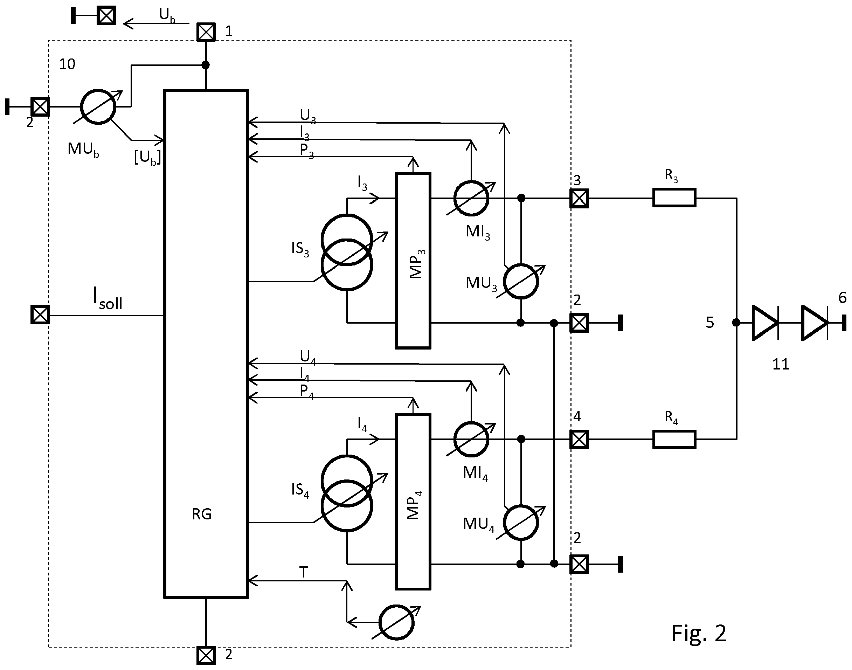

Bei der Schaltung nach Fig. 2 ist im Gegensatz zur Schaltung nach Fig. 1 ein weiterer Widerstand R₃ vorgesehen.

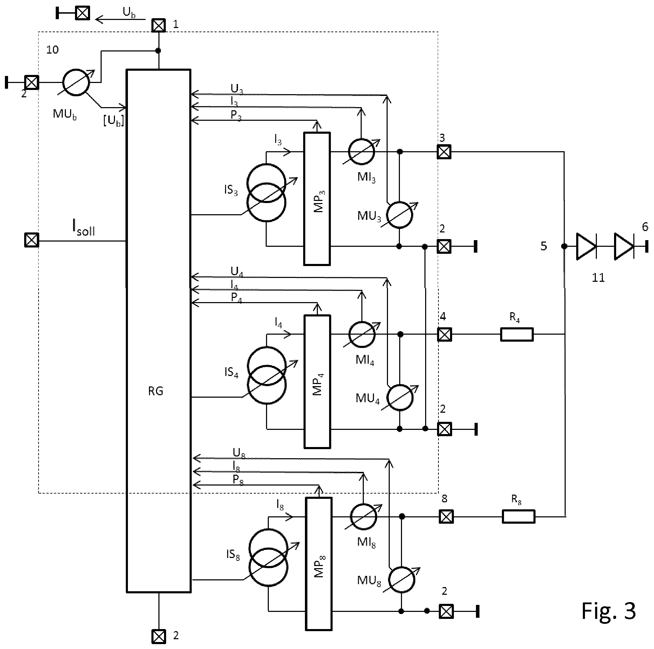

Die Schaltung nach Fig. 3 weist im Gegensatz zu derjenigen gemäß Fig. 1 einen weiteren Ausgang 8 auf, der mit dem ersten Anschluss 5 ebenfalls über einen externen Widerstand R₈ verbunden ist. Die zugehörigen Messeinrichtungen MU₈, MI₈, MP₈ liefern die jeweiligen Messwerte P₈, U₈, I₈ ebenfalls an den Regler RG der die Stromquellen insgesamt steuert. Typischerweise wird der Widerstand R₈ so gewählt, dass er den doppelten Wert des Widerstands R₄ besitzt.

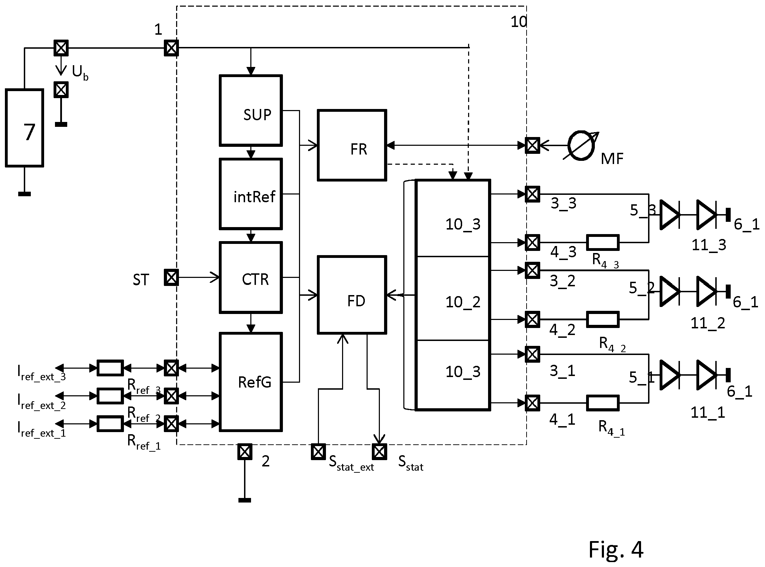

Fig. 4 zeigt eine beispielhafte Regelschaltung für eine RGB-LED-Beleuchtung. Die erfindungsgemäßen Regelschaltungen 10_1, 10_2, 10_3 steuern jeweils eine LED-Kette 11_1, 11_2, 11_3 einer Farbe. Die zweiten Anschlüsse 4_1, 4_2, 4_3 sind jeweils über einen externen Widerstand R_{4_1}, R_{4_2}, R_{4_3} mit dem ersten Anschluss 5_1, 5_2, 5_3 der jeweiligen LED-Kette 11_1, 11_2, 11_3 verbunden. Die jeweiligen ersten Anschlüsse 3_1, 3_2, 3_3 sind direkt mit diesen verbunden. Die zweiten Anschlüsse 6_1, 6_2, 6_3 der LED-Ketten 11_1, 11_2, 11_3 sind mit dem Masseanschluss 2 der Vorrichtung 10 verbunden. Ein Referenz-Generator RefG ermöglicht es, die Sollwerte (z.B. Iₛₒₗₗ) der einzelnen Teilvorrichtungen 10_1, 10_2, 10_3 von extern mittels der Ströme I_{ref_ext_1}, I_{ref_ext_2}, I_{ref_ext_3} einzustellen. Diese Ströme können über die Widerstände R_{ref_1}, R_{ref_2}, R_{ref_3} bei Spannungsvorgabe statt Stromvorgabe eingestellt werden. Ein Controller CTR steuert die gesamte Vorrichtung. Diese kann über eine Datenschnittstelle ST angesprochen werden. Die beispielhafte Vorrichtung verfügt über eine Spannungsversorgung SUP die die ungeregelte Betriebsspannung U_{b} für die Nutzung in der Regelschaltung 10 aufbereitet. Ein Farbregler FR erhält von einem Farb-Sensor MF Informationen über die farbliche Zusammensetzung und die Intensität des Abgestrahlten Lichtes. Diese Informationen werden vom Farbreger FR in Sollwertvorgaben für die Teilvorrichtungen 10_1, 10_2, 10_3 umgesetzt. Hierdurch wird eine Farbzusammensetzung und Beleuchtungsintensität eingestellt, die einer Vorgabe genügt. Natürlich ist es auch möglich, das zurückgestrahlte Licht zu vermessen und die Beleuchtung in Abhängigkeit davon nachzuregeln. Dabei können beispielsweise die Sollwertvorgaben verschiedener Sollwertquellen, die zuvor beschrieben wurden, miteinander beispielsweise durch Multiplikation miteinander in einer geeigneten Vorrichtung, typischerweise dem Regler RG, zu einer gemeinsamen Sollwertvorgabe Iₛᵤₘ für den jeweiligen Summenstrom I₃+I₄, I₃+I₄,+I₈ und/oder den Verteilungsparameter Vₚ kombiniert werden. Eine Fehler-Detektion vergleicht die Messwerte der Messinstrumente der Teilvorrichtungen 10_1, 10_2, 10_3 mit Sollvorgaben bzw. Soll-Vorgabenbereichen. Dabei können auch vergangene und abgeleitete Werte benutzt werden. Stellt der Fehler-Detektor FD eine Fehlerbedingung fest, so wird diese über ein Fehlersignal Sₛₜₐₜ ausgegeben. Eine Ausgabe über die Datenschnittstelle ST ist natürlich ebenso möglich. Eine interne Referenz intRef dient zur Einstellung grundlegender interner Parameter.

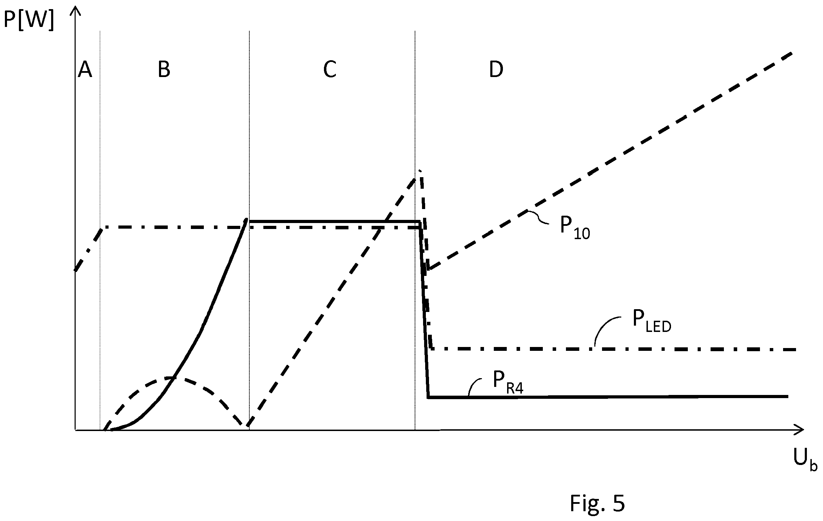

Fig. 5 zeigt die Aufteilung des Leistungsverbrauche in verschiedenen Betriebsspannungsbereichen für eine Vorrichtung ähnlich der Fig. 1. In einem Anlaufbereich A leiten die LED noch nicht voll und begrenzen den Summenstrom I₃+I₄. In diesem Bereich liefert typischerweise nur der erste Ausgang 3 den Strom für den Betrieb des Verbrauchers 11 (hier der LEDs). In einem zweiten Betriebsspannungsbereich B wird der Strom nach und nach durch den zweiten Stromzweig am zweiten Anschluss 4 mit dem zweiten externen Widerstand R₄ übernommen. Die Leistung P_{R4}, die dabei im Widerstand R₄ umgesetzt wird, steigt parabolisch an. Die Leistung P_{LED}, die in den LEDs umgesetzt wird, bleibt dabei weitestgehend konstant. Ab einem bestimmten Betriebsspannungspunkt kann der zweite Ausgang 4 nicht mehr ausreichend Spannung liefern. Daher würde nun der Gesamtstrom I₃+I₄ durch die LEDs und damit P_{LED} wieder ansteigen. Daher wird nun in einem dritten Betriebsspannungsbereich C die zusätzliche Verlustleistung in der Regelschaltung umgesetzt. Die Verlustleitung P₁₀ der Regelschaltung steigt nun kontinuierlich an. Die Leistungsaufnahme P_{LED} der LEDs bleibt weiter konstant. Die Leistungsaufnahme P_{R4}, des zweiten externen Widerstands R₄ bleibt konstant. In einem vierten Betriebsspannungsbereich D kann die Regelung nicht mehr aufrechterhalten werden und das System geht in einen Notlaufmodus.

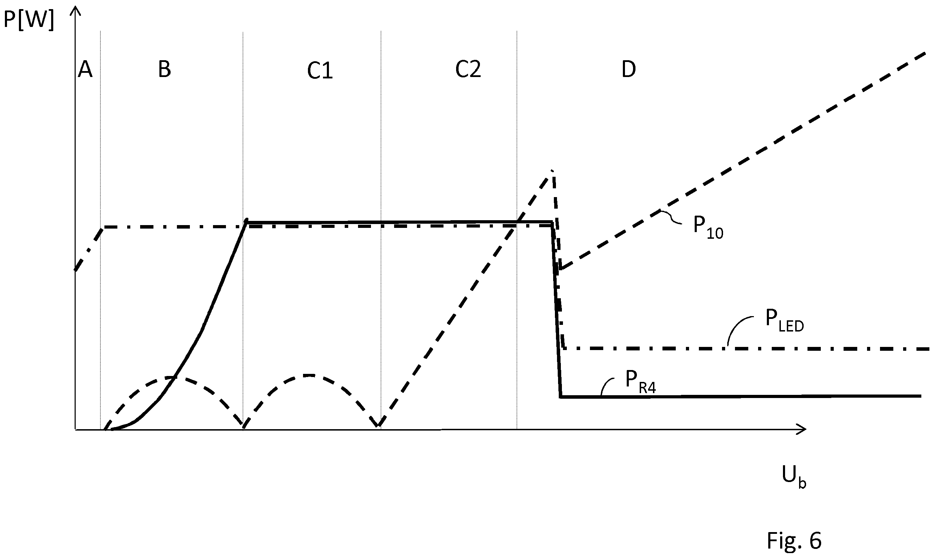

Fig. 6 zeigt die Regelcharakteristik einer bevorzugten Ausprägung der Erfindung für die Energieversorgung von LEDs. Diese Regelcharakteristik gestaltet sich nun so, dass diese in Abhängigkeit von der Betriebsspannung U_{b} mehrere Betriebsspannungsbereiche aufweist. Für die folgenden Ausführungen wird zur Vereinfachung angenommen, dass der erste Widerstand R₃ den Wert Null Ohm hat. Sind mehrere Zweige vorhanden, so sollte ein Widerstand den Wert Null haben. In einem ersten Betriebsspannungsbereich A schalten die Leuchtdioden (LEDs) noch nicht durch. Daher steigt in diesem Betriebsspannungsbereich der Strom durch die LEDs und damit die abgegebene Leistung in Abhängigkeit von der Betriebsspannung U_{b} an. In diesem Betriebsspannungsbereich wird durch die Regelschaltung der Sollstrom Iₛᵤₘ noch nicht an die LEDs abgegeben, da der Summenstrom I₃+I₄ nicht durch die Regelschaltung 10, sondern durch die LEDs, also den Verbraucher 11, begrenzt wird. Beim Übergang vom Betriebsspannungsbereich A in einen zweiten Betriebsspannungsbereich B liefert der erste Ausgang 3 den gesamten Strom. Der erste Ausgang 3 ist in diesem Beispiel direkt mit dem Verbraucher 11 verbunden. Der Ausgangsstrom I₄ des zweiten Ausgangs 4, der über den zweiten externen Widerstand R₄ mit dem Verbraucher 11 verbunden ist, ist an diesem Betriebsspannungspunkt noch 0A. Der erste Ausgang 3 muss deshalb den gesamten Summenstrom I₃+I₄ liefern, weil ein Spannungsabfall über den zweiten externen Widerstand R₄ am zweiten Ausgang 4 nicht gewünscht ist. Mit dem Übergang in den Betriebsspannungsbereich B würde der Regler der Stromquelle am ersten Ausgang 3, um nicht mehr Strom liefern zu müssen, seinen parallel zur Stromquelle geschalteten Innenleitwert, erniedrigen müssen. Dies würde zu einem steigenden Leistungsverlust in diesem Regler führen. Daher übernimmt der zweite Ausgang nun nach und nach einen Teil des Summenstromes I₃+I₄. Dies geschieht beispielsweise in der Weise, dass die erste Ausgangsspannung U₃ am ersten Ausgang 3 der Regelschaltung 10 und damit die Spannung, die über die LEDs und damit den Verbraucher 11 abfällt, konstant gehalten wird. Dies bedeutet, dass der Strom I₃+I₄ durch die LEDs konstant bleibt. Hierfür wird der zweite Ausgangsstrom I₄ aus dem zweiten Ausgang 4 so eingestellt, dass über den zweiten externen Widerstand R₄, der zwischen dem zweiten Ausgang 4 und den LEDs, also den zweiten Anschluss des Verbrauchers 6, geschaltet ist, die zusätzliche Spannung abfällt. Daher steigt in diesem Betriebsspannungsbereich B die Verlustleistung P_{R4} des zweiten externen Widerstands R₄ parabolisch an, während die Verlustleistung P_{LED}, die in den LEDs freigesetzt wird, gleich bleibt. Ab einem bestimmten Punkt liefert die Stromquelle des zweiten Ausgangs 4 nicht mehr genügend Strom I₄, um die Spannung über dem Widerstand mit weiter steigender Betriebsspannung U_{b} weiter steigen zu lassen. Dieser Punkt markiert den Übergang zu einem weiteren Betriebsspannungsbereich C, in dem sowohl die Leistung P_{R4} im zweiten externen Widerstand R₄ als auch die Leistung P_{LED} in den LEDs nahezu konstant bleiben. Die zusätzliche Verlustleistung muss nun in der Regelschaltung 10 selbst beseitigt werden, was nur bis zu einem weiteren Betriebsspannungspunkt erfolgen kann. Dann erfolgt ein Übergang in einen Betriebsspannungsbereich D, in dem die Leistung insgesamt abgesenkt werden muss, um eine Zerstörung der Regelschaltung 10 und/oder der LEDs, also des Verbrauchers 11, zu verhindern. In diesem Betriebsspannungsbereich D ist typischerweise eine korrekte oder vollständige Funktion des Verbrauchers 11 oder aller Verbraucher nicht mehr gegeben oder möglich.

Werden mehr als zwei Ausgänge für die Versorgung eines Verbrauchers, hier einer LED-Kette, benutzt, so sind natürlich komplexere Bereichsmuster denkbar.

In den Bereichen B und C wird also die Summe der Ausgangsströme I₃+I₄ konstant gehalten. In dem Bereich B wird mit dem Ausgangsstrom I₄ des zweiten Ausgangs 4 nachgeregelt, während im Bereich C durch den Spannungsabfall über die Regelschaltung 10 der Summenstrom I₃+I₄ durch den Verbraucher 11 nachgeregelt wird und konstant gehalten wird. Der Bereich D ist ein Bereich, der typischerweise außerhalb der jeweiligen Spezifikation für die Regelschaltung 10 liegt und daher nur Notlaufeigenschaften aufweisen muss.

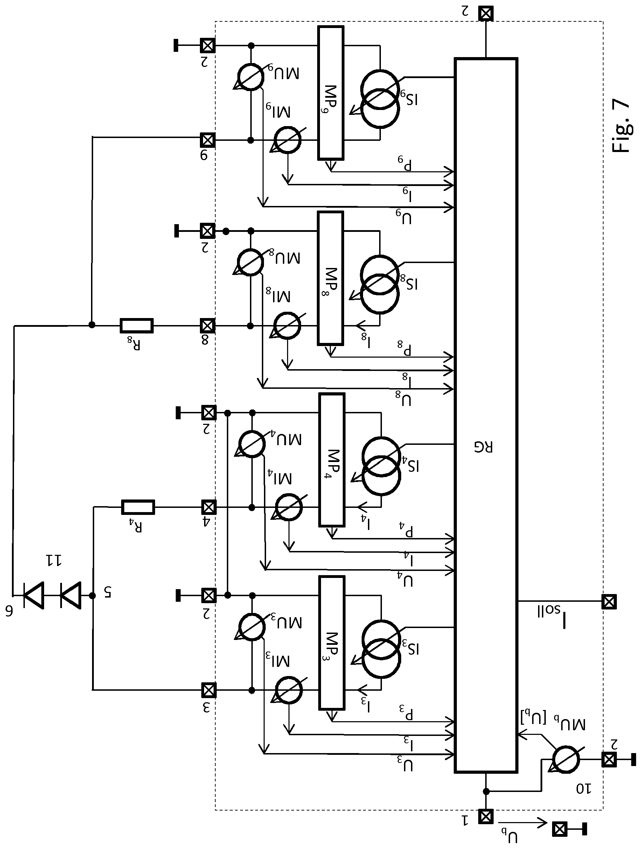

Fig. 7 zeigt eine Schaltungsanordnung ähnlich der gemäß Fig. 1, jedoch mit einer verringerten Anzahl an Eingangs- sowie Ausgangsanschlüssen. Im Übrigen ist die Funktionsweise dieser Schaltung die gleiche wie sie oben beschrieben ist.

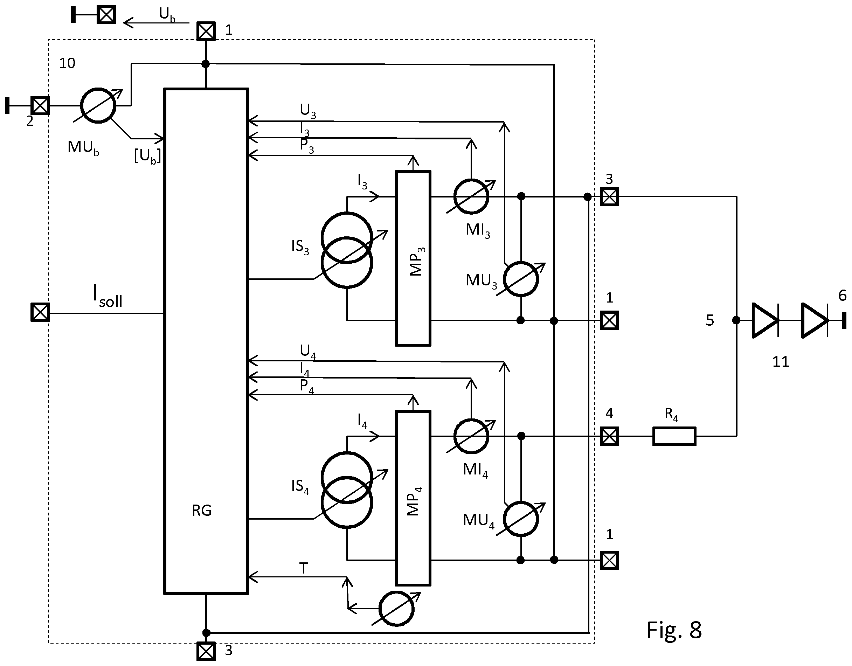

Anhand der Ausführungsbeispiele nach Fig. 8 ist zu erkennen, dass der Verbraucher 11 über insgesamt vier Leistungsmodule versorgt wird. Jeweils zwei dieser Leistungsmodule sind mit einem Anschluss des Verbrauchers verbunden, wobei jedes dieser Leistungsmodulpaare einen möglichst niederohmig (im Idealfall ohne wirksamen ohmschen Widerstand) an den Verbraucher angeschlossenen Pfad und einen Leistungspfad mit externem Widerstand aufweist.

Zur Klarstellung und Verallgemeinerung des Erfindungskonzeptes sei an dieser Stelle noch hervorgehoben, dass mit dem Begriff "externer Widerstand" nicht notwendigerweise ein ohmscher Widerstand gemeint ist. Vielmehr soll mit diesem Begriff, wie sich aus dem Kontext der Erfindung ergibt, zum Ausdruck gebracht werden, dass ein außerhalb des ICs angeordneter Verlustleistungsverbraucher vorhanden ist, der elektrische Verlustleistung in Form beispielsweise von Wärme an die Umgebung abgibt.

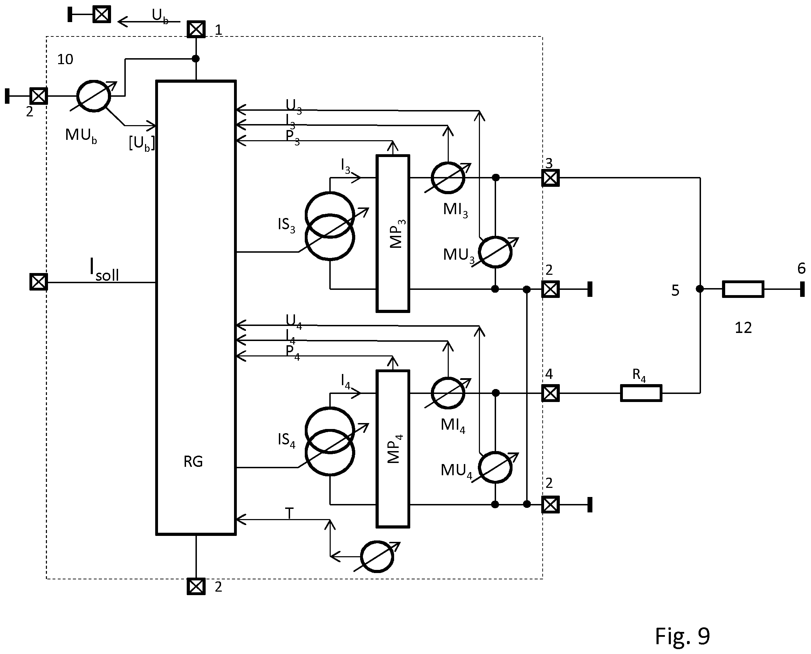

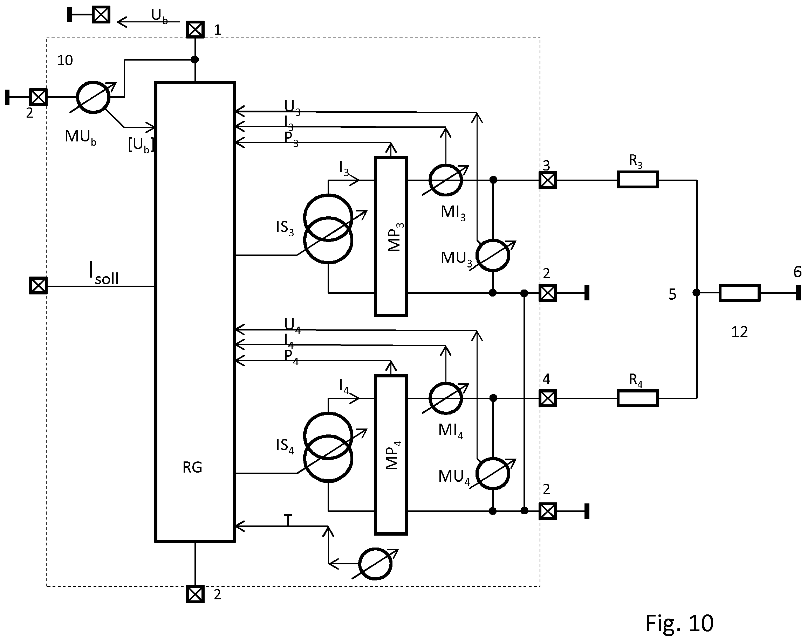

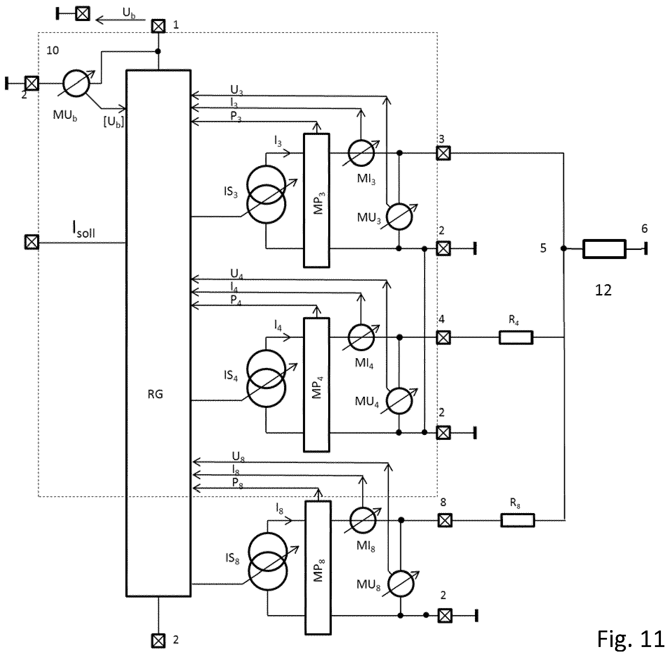

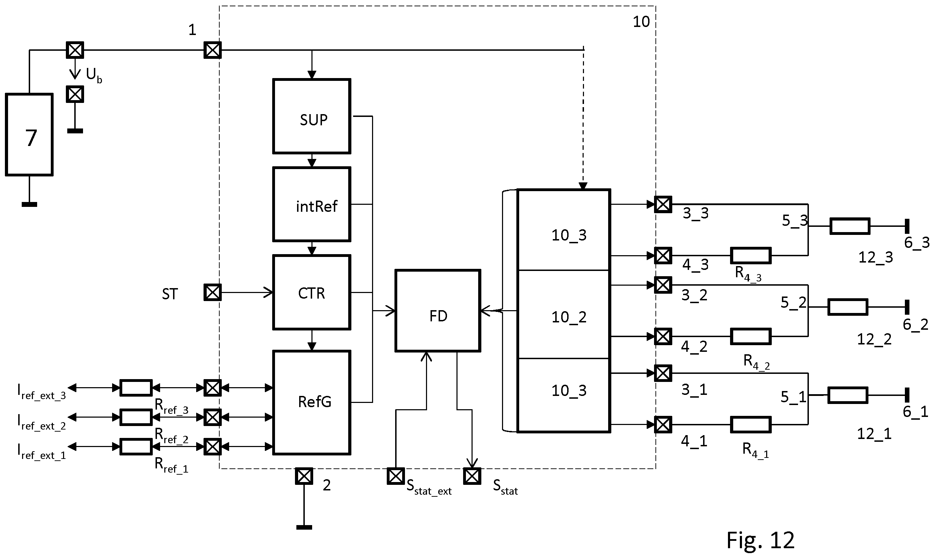

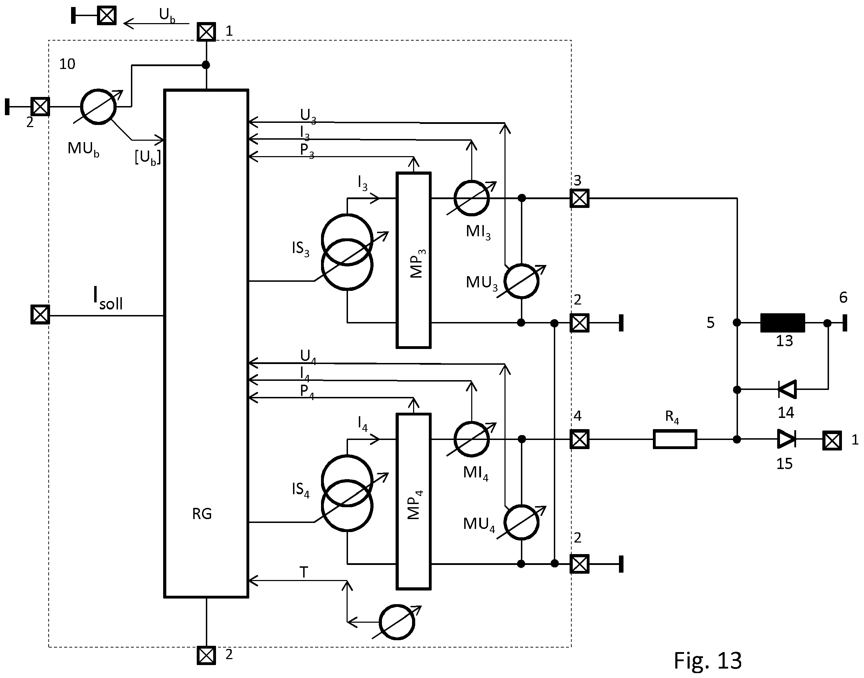

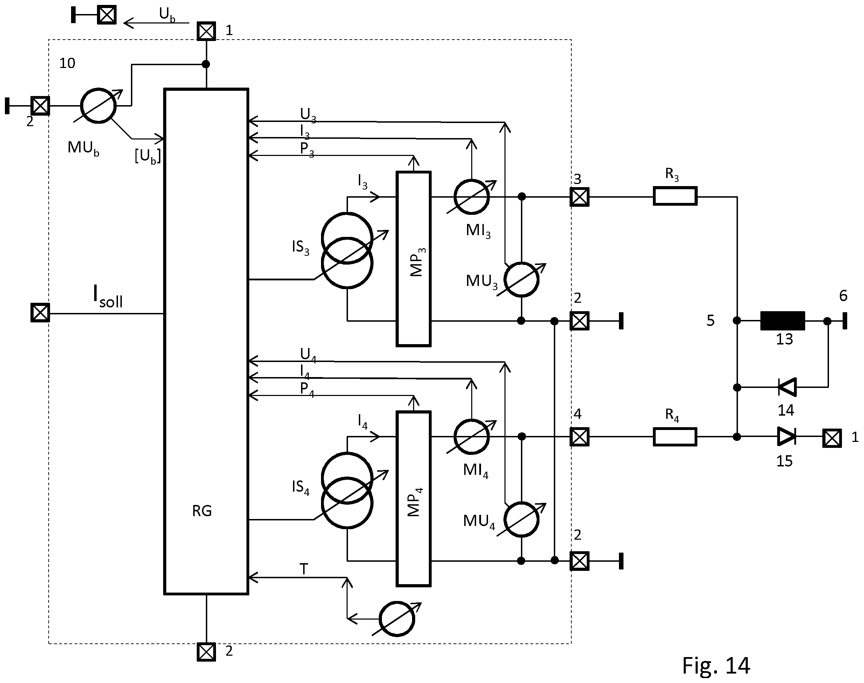

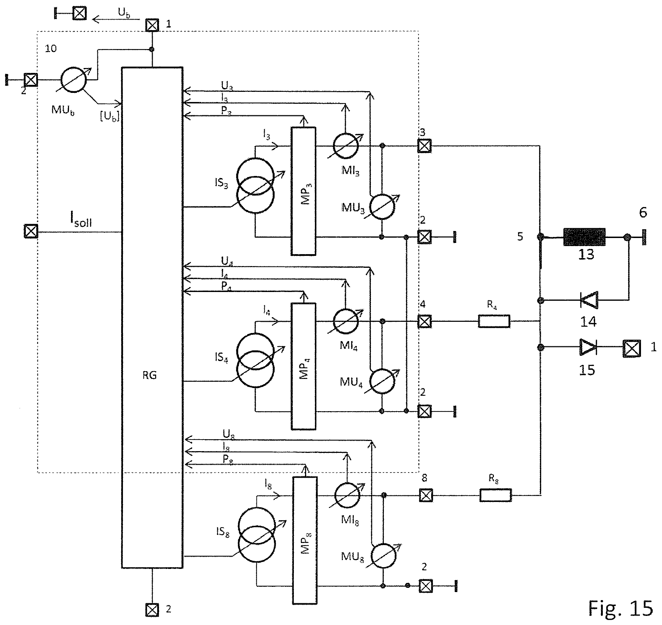

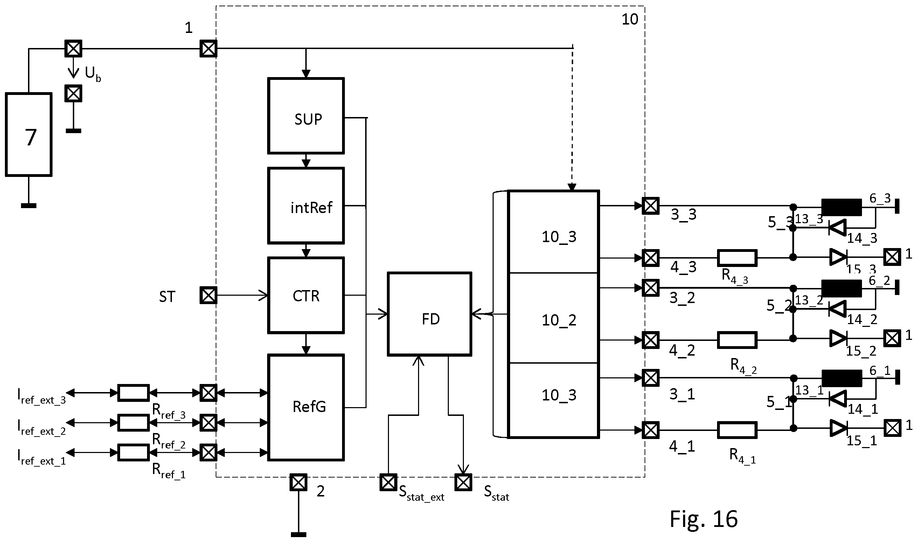

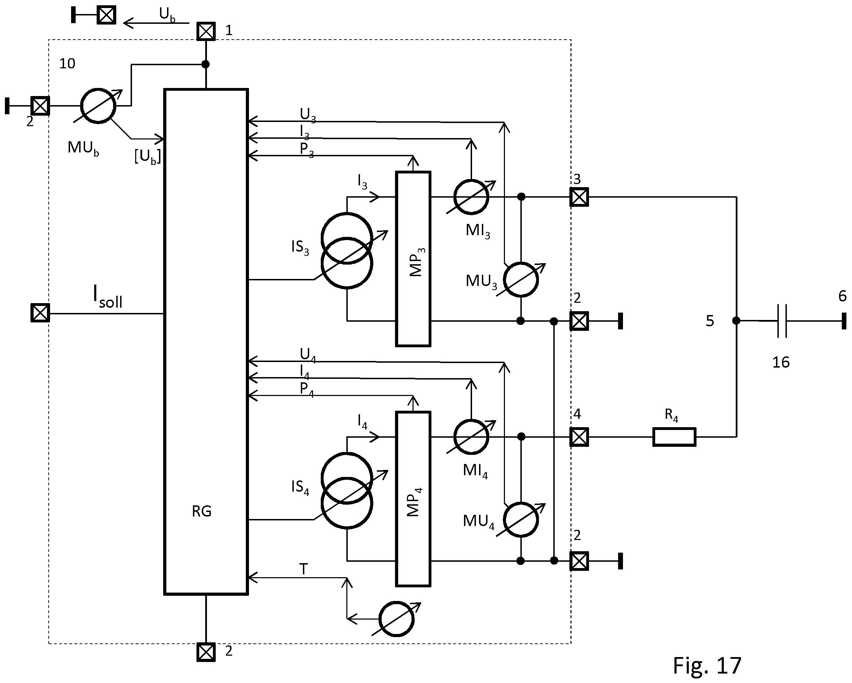

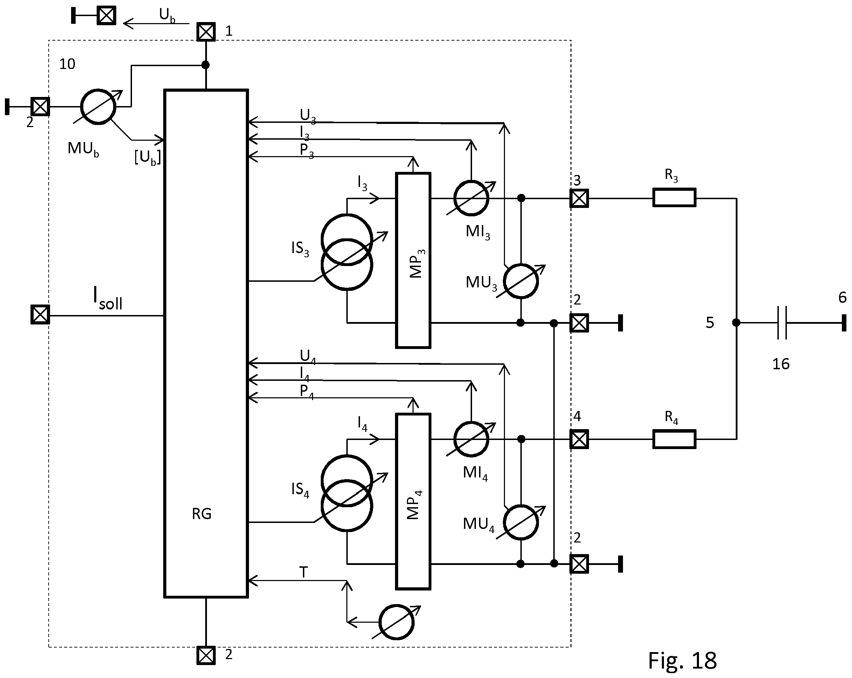

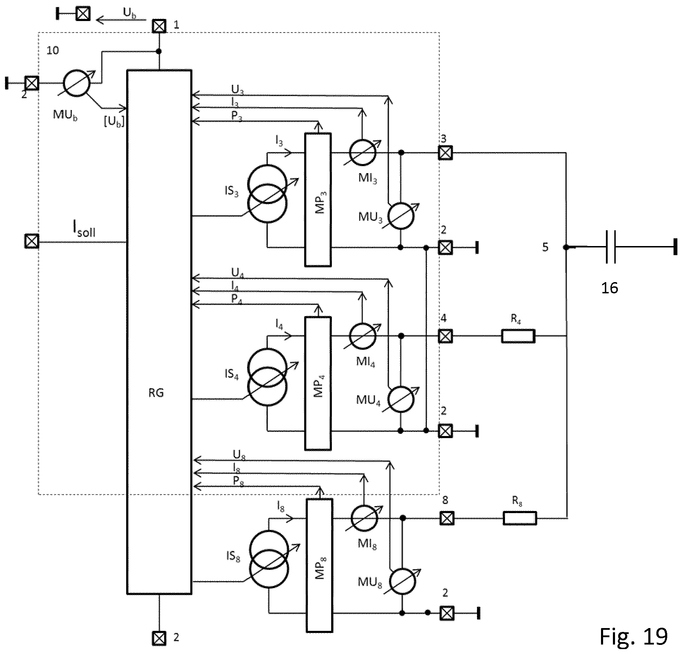

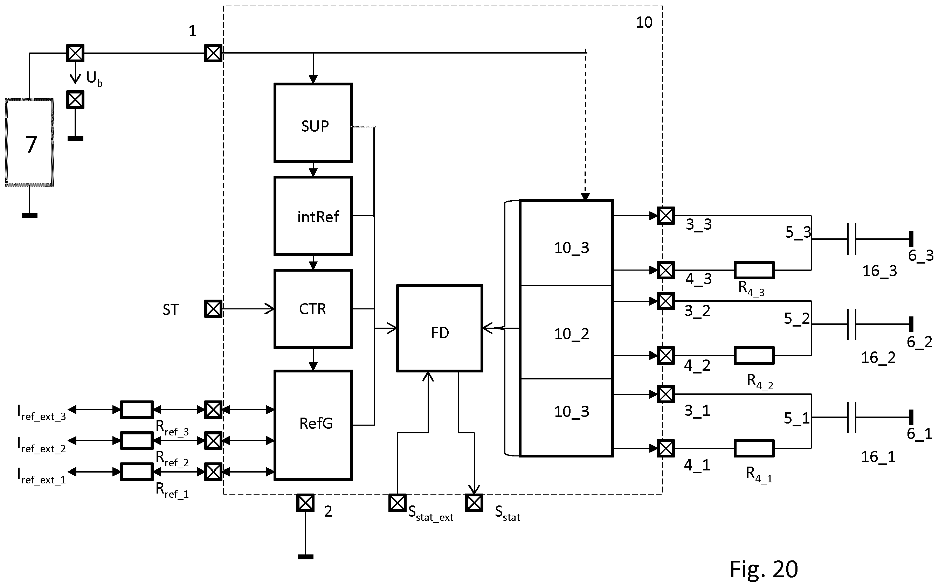

In den Fign. 9 bis 20 sind die zuvor beschriebenen Varianten der Vorrichtungen in ihren Applikationen bei anderen Verbrauchern als LEDs gezeigt. In den Fign. 9 bis 12 ist der Verbraucher eine ohmsche Last 12, in den Fign. 13 bis 16 eine induktive Last 13 (mit Freilaufdiode 14 und Überspannungsschutzdiode 15) und in den Fign. 17 bis 20 eine kapazitive Last 16. Im Übrigen arbeiten die Vorrichtungen der Fign. 9 bis 20 so, wie es oben im Zusammenhang mit den Fign. 1 bis 8 beschrieben ist. Dabei ist es möglich, dass die ohmsche, induktive oder kapazitive Last in den Schaltungen gemäß den Fign. 12, 16 bzw. 20 als sowohl Stern- als auch Dreieckschaltung angeordnet sein können.

Im Folgenden wird die Erfindung in verallgemeinerter Form nochmals erläutert, wobei zur Vereinfachung der Beschreibung der Erfindung die Versorgung eines einzelnen Verbrauchers mittels zweier Stromquellen, die Strom in zwei Strompfade einspeisen, beschrieben wird. Dem Fachmann wird es leicht möglich sein, diese Grundidee auf drei und mehr Strompfade zu erweitern.

Die nachfolgend angegebenen Bezugszeichen beziehen sich auf die Zeichnung.

Es handelt sich also um eine Vorrichtung zur geregelten Versorgung mindestens eines Verbrauchers 11 mit elektrischer Energie durch eine Regelschaltung 10. Zur Vereinfachung sei angenommen, dass die Regelschaltung 10 über mindestens vier Anschlüsse 1, 2, 3, 4 verfügt. Ein Anschluss 2 sei dabei beispielsweise der Masseanschluss und das Bezugspotenzial der erfindungsgemäßen Regelschaltung 10, die Teil der erfindungsgemäßen Vorrichtung ist. Ein beispielhafter Verbraucher 11 verfügt über zwei Versorgungsanschlüsse 5, 6. Die Anschlüsse 5, 6 des Verbrauchers 11 sind mit einem Ausgang 3 und dem Masseanschluss 2 der Regelschaltung 10 verbunden. Die Regelschaltung 10 wird aus einer geregelten oder ungeregelten Energiequelle 7 mindestens über ihren Versorgungsspannungsanschluss 1 und den Masseanschluss 2 mit elektrischer Energie versorgt. Der zweite Ausgang der Regelschaltung 4 ist über einen zweiten externen Widerstand R₄ mit einem ersten Anschluss 5 des Verbrauchers 11 elektrisch verbunden. Dabei kann der Verbraucher 11 auch ein fast beliebiges elektrisches Netzwerk mehrerer Verbraucher sein, die Teil des Verbrauchers 11 sind. Beispielsweise kann es sich in Teilen oder im Ganzen um eine Serien- und/oder Parallelschaltung von LEDs handeln. Wichtig ist nur, dass die Versorgung zumindest eines Teils des Verbrauchers über die Anschlüsse 5, 6 erfolgt.

In jedem Fall sollte der Verbraucher 11 ein gemeinsames Bezugspotenzial 2 mit der Regelschaltung 10 und der Energiequelle 7 aufweisen. Diese Verbindung kann elektrisch direkt oder aber auch indirekt über einen weiteren Verbraucher oder ein weiteres Verbrauchernetzwerk geschehen. Beispielweise kann der zweite Anschluss 6 des Verbrauchers 11 direkt mit dem Masseanschluss 2 der Regelschaltung 10 verbunden sein.

Natürlich ist es möglich, dass zwischen dem ersten Ausgang 3 der Regelschaltung 10 und dem ersten Anschluss des Verbrauchers 5 statt einer direkten Verbindung eine Verbindung über einen ersten externen Widerstand R₃ besteht. Für den erfinderischen Gedanken ist es nur wesentlich, dass dieser erste externe Widerstand R₃ einen anderen Wert als der zweite externe Widerstand R₄ aufweist, da nur dann eine Regelung des Ortes des Anfalls der Regelverlustleistung in gewissem Umfang möglich ist. Natürlich ist es sinnvoll und zweckmäßig, wenn einer der externen Widerstände R₃, R₄ einen Wert von Null Ohm hat, was in der Realität einem sehr gering von Null verschiedenen Wert entspricht. In der Regel wird eine solche Verbindung einfach als direkte Verbindung realisiert, was beispielsweise einem Widerstand von wenigen mOhm entspricht.

Die Widerstände R₃, R₄ können dann als ungleich angesehen werden, wenn je nach Material der Widerstände diese um mehr als 1% oder besser mehr als 2% oder besser mehr als 5% oder besser mehr als 10% oder besser mehr als 25% oder besser mehr als 50% oder besser mehr als 100% voneinander abweichen. Besonders bevorzugt sind Zuleitungswiderstände zwischen dem ersten Ausgang 3 der Regelschaltung 10 und dem zweiten Anschluss des Verbrauchers 6 von weniger als 10 Ohm oder besser weniger als 5 Ohm oder besser weniger als 2 Ohm oder besser weniger als 1 Ohm oder besser weniger als 100 mOhm. Solche niedrigen Widerstände können ganz allgemein im Sinne dieser Offenbarung als mit einem Wert von nahezu Null Ohm betrachtet werden.

Der Verbraucher 11 wird nun mit der Summe der beiden Ausgangsströme I3 +I4 versorgt. Damit die Regelschaltung 10 ihre eigentliche Kernaufgabe, nämlich die Regelung des Stromes durch den Verbraucher 11, wahrnehmen kann, ist es offensichtlich, dass die Summe der Ausgangsströme I₃+I₄ an den Ausgängen 3, 4 der Regelschaltung 10 geregelt werden muss. Diese Summe der Ausgangsströme I₃+I₄ muss daher innerhalb der Regelschaltung als ein Ist-Wert gebildet werden. Dieser Ist-Wert I₃+I₄ wird dann in der Regelschaltung mit einem Sollwert Iₛᵤₘ, der vorgegeben ist, verglichen. Beide Ströme I₃, I₄ werden dann bei Abweichungen zwischen der Summe der Ausgangsströme I₃+I₄ und dem Sollwert Iₛᵤₘ entsprechend nachgeregelt. Im einfachsten Falle geschieht diese "entsprechende" Nachregelung beispielsweise durch eine Proportionalregelung, bei der beiden Ströme I₃, I₄ der beiden Ausgänge 3, 4 um einen gleichen Faktor nachgeregelt werden. Ein Entsprechen des Sollwerts Iₛᵤₘ gegenüber dem vorgegebenen Summenstrom I₃+I₄ kann natürlich auch kompliziertere Funktionen als die zuvor beschriebene, einfache affine Abbildung umfassen. Wichtig ist, dass diese zumindest zeitweise durch eine bijektive, streng monoton steigende Funktion zwischen dem Sollwert Iₛₒₗₗ und der Stromsumme I₃+I₄ beschrieben werden kann. Der Sollwert Iₛᵤₘ kann dabei von außen vorgegeben werden oder in der Regelschaltung 10 als interner Referenzstrom I_{ref_int} fest vorgegeben werden. Natürlich ist beispielsweise die Umrechnung dieser Größen durch analoge oder digitale Rechenschaltungen in andere Parameter wie beispielsweise Spannungen vor dem Vergleich möglich. Diese besagte Vorgabe des Sollwerts Iₛᵤₘ kann von außen dabei beispielsweise durch einen Referenzstrom I_{ref_ext} oder einen Referenzwiderstand R_{ref} eingestellt werden. Bei einer programmierten Vorgabe kann beispielsweise durch eine Datenschnittstelle ST ein Wert in ein Register geschrieben werden, woraufhin ein Digital-zu-Analog-Converter ADC den Sollwert erzeugt. Im Stand der Technik sind hierfür mannigfache Methoden bekannt, so dass eine weitere Ausführung hier nicht notwendig ist.

Als zweiter wesentlicher regelbarer Parameter ist die Verteilung des Summenstroms I₃+I₄ auf die Ausgangsströme I₃, I₄ zu nennen. Da deren Summe I₃+I₄ ja durch den besagten Sollwert Iₛᵤₘ festgelegt ist, wird nur das Verhältnis der Aufteilung zwischen diesen Strömen I₃, I₄ durch mindestens einen Regelparameter bestimmt. Dieser wird im Folgenden als Aufteilungsparameter Vₚ bezeichnet. Dieser Aufteilungsparameter Vₚ kann nach verschiedenen Gesichtspunkten ermittelt werden. Im einfachsten Fall wird dieser von außen über eine Schnittstelle vorgegeben. Beispielsweise kann dies wieder über eine Datenschnittstelle ST und ein weiteres Register erfolgen oder über eine PWM-Schnittstelle, wobei das Tastverhältnis beispielsweise den Aufteilungsparameter Vₚ oder einen der erwähnten analogen Werte I_{ref_ext} wieder gibt. Wesentlich besser ist jedoch die Ermittlung des Aufteilungsparameters Vₚ innerhalb der Regelschaltung 10 selbst. Hierfür verfügt die Regelschaltung typischerweise über eine geeignete Komponente, die diese Ermittlung des Aufteilungsparameters Vₚ durchführt.

Um diesen Aufteilungsparameter Vₚ zu ermitteln, ist es zunächst sinnvoll, wesentliche Betriebsparameter der Regelschaltung 10 zu erfassen. Dabei muss diese Erfassung nicht unbedingt ständig erfolgen. Es können für bestimmte Betriebsparameter vorbestimmte Zeitpunkte vorgesehen werden. Hierbei können die Messungen zyklisch oder mit Hilfe eines bandbegrenzten Mess-TriggerSignals erfolgen. Dann, wenn das Signal bestimmte Bedingungen, z.B. einen Nulldurchgang erfüllt, erfolgt eine Messung. Letztere Methodik hat den Vorteil, dass möglicherwiese die Anforderungen der elektromagnetischen Verträglichkeit beachtet werden können. Dies hängt jedoch vom konkreten Anwendungsfall ab. Als sinnvolle Messgrößen haben sich eine Messung des Ausgangsstromes I₃, I₄ der Regelschaltung 10 und/oder eine Messung der Ausgangsspannung U₃, U₄ der Regelschaltung 10 und/oder eine Messung der Ausgangsleistung P₃, P₄ der Regelschaltung 10 sowie die Messung von Betriebstemperaturen T herausgestellt. Letztere können beispielsweise in der Regelschaltung 10 selbst und/oder in Teilen der Regelschaltung 10 und/oder in der Nähe der Regelschaltung 10 und/oder in der Nähe eines Widerstands R₃, R₄ und/oder in der Nähe eines Verbrauchers 11 gemessen werden. Einer oder mehrerer dieser Werte können dann durch analoge und/oder digitale Berechnung zu dem besagten Aufteilungsparameter Vₚ umgeformt werden. Natürlich ist eine mehrdimensionale Regelung, die sowohl die Stromsumme I₃+I₄ als auch die Stromverteilung zwischen den Ausgangsströmen I₃, I₄ regelt, sinnvoll, da aufgrund der Messungen insbesondere fehlerhafte Zustände detektiert werden können, was beispielsweise zum Abschalten der Regelschaltung durch Abschaltung eines oder mehrerer Ausgänge 3, 4 führen kann. Insofern ist es sinnvoll, dass nicht nur die aktuellen Werte dieser Messwerte, sondern auch deren vergangene Werte und vergangene Werte für den Sollwert der Stromsumme Iₛᵤₘ und den Aufteilungsparameter Vₚ für die Berechnung der aktuellen Sollwerte für die Stromsumme Iₛᵤₘ und den Aufteilungsparameter Vₚ herangezogen werden. Diese vergangenen Werte werden ggf. in einem geeigneten analogen oder digitalen Speicher zwischengespeichert. Es kann sich bei den besagten analogen Speichern dabei beispielsweise um einen Tiefpass oder eine Sample-and-Hold-Schaltung handeln.

Alle diese gemessenen Parameter und auch der Verlauf der gespeicherten Werte sowie deren zeitliche einfachen und höheren Ableitungen und aus diesen abgeleitete Werte können jeweils mit Sollwerten verglichen werden.

Die Vorrichtung weist daher eine Komponente, typischerweise einen Regler RG, auf, die einen der gemessenen Werte oder einen zwischen-gespeicherten Messwert oder einen daraus abgeleiteten Wert mit einem zugehörigen Sollwert vergleicht. Der Vergleich erfolgt durch den Regler RG in der Weise, dass der Regler prüft, ob der besagte gemessene Wert kleiner als der Sollwert oder größer als der Sollwert ist. Natürlich ist es in manchen Fällen sinnvoll, dass der Regler prüft, ob der gemessene Wert gleich einem Sollwert ist. Dies bedeutet, dass der gemessene Wert innerhalb eines Toleranzbands um den Sollwert liegen muss. Es handelt sich also eher um ein Soll-Band. Natürlich ist es dann nicht sinnvoll, diese gemessenen Werte gleichzeitig als größer oder kleiner zu bewerten. Als Messwerte für einen solchen Vergleich können beispielsweise einer der Ausgangsströme I₃, I₄, I₈ oder eine der Ausgangsspannungen U₃, U₄, U₈ oder eine der Ausgangsleistungen P₃, P₄, P₈ oder die Summe aller oder eines Teils der Ausgangsströme I₃+I₄, I₃+I₄+ I₈ oder die Summe aller oder eines Teils der Ausgangsleistungen P₃+P₄, P₃+P₄+P₈ oder die von der Energiequelle 7 zur Verfügung gestellten Betriebsspannung U_{b} oder die Temperatur T der Regelschaltung 10 die Temperatur T eines Teils der Regelschaltung 10 oder die Temperatur T in der Nähe der Regelschaltung 10 oder die Temperatur T in der Nähe zumindest eines Verbrauchers 11 oder die Temperatur T in der Nähe zumindest eines externen Widerstands R₃, R₄, R₈ oder die Temperatur T in einem Kühlmittel oder einem Kühlmedium in der Nähe eines Widerstands R₃, R₄, R₈ oder ein zwischengespeicherter Wert dieser Werte oder eine aus diesen Werten und/oder deren zwischengespeicherten Werten abgeleitete Größe verwendet werden.

Es hat sich gezeigt, dass es bereits zu guten Ergebnissen führt, wenn der Aufteilungsparameter Vₚ die Betriebsspannung U_{b} ist oder mit dieser korreliert. Es ist aber ebenso denkbar, als Aufteilungsparameter Vₚ einen der Ausgangsströme I₃, I₄ oder eine der Ausgangsspannungen U₃, U₄ oder eine der Ausgangsleistungen P₃, P₄ oder die Summe aller oder eines Teils der Ausgangsströme I₃+I₄ oder die Summe aller oder eines Teils der Ausgangsleistungen P₃+P₄ oder die Temperatur T der Regelschaltung 10 oder die Temperatur T eines Teils der Regelschaltung 10 oder die Temperatur T in der Nähe der Regelschaltung 10 oder die Temperatur T in der Nähe eines Verbrauchers 11 oder die Temperatur T in der Nähe eines Widerstands R₃, R₄ oder die Temperatur T eines Kühlmittels oder Kühlmediums in der Nähe eines Widerstands R₃, R₄ zu verwenden.

Darüber hinaus ist es auch möglich, die Summe der Ausgangsströme I₃+I₄ in Abhängigkeit von einer der Ausgangsspannungen U₃, U₄ oder in Abhängigkeit von einer der Ausgangsleistungen P₃, P₄ oder in Abhängigkeit von der Summe der Ausgangsleistungen P₃+P₄ oder in Abhängigkeit von der der Temperatur T der Regelschaltung 10 oder der Temperatur T eines Teils der Regelschaltung 10 oder der Temperatur T in der Nähe der Regelschaltung 10 oder der Temperatur T in der Nähe eines Verbrauchers 11 oder der Temperatur T in der Nähe eines Widerstands R₃, R₄ zu regeln. Statt der vorgenannten Werte können ersatzweise oder zusätzlich auch gespeicherte Werte dieser Werte und/oder aus diesen Werten abgeleitete Größen oder die Betriebsspannung U_{b} für die Regelung verwendet werden.

Wie bereits erwähnt, eröffnen die vorhandenen Messwerte die Möglichkeit, diese für eine Fehlererkennung zu nutzen. Daher verfügt eine erfindungsgemäße Vorrichtung nicht nur über Komponenten, um diese Messungen vorzunehmen und daraus die besagten Regelsignale Iₛₒₗₗ, Vₚ zu erzeugen, sondern vorzugsweise, aber nicht notwendigerweise, auch über eine Komponente, die die Funktion einer Fehlerüberwachung hat. Diese gibt mindestens ein Fehlersignal Sₛₜₐₜ aus, das einen Fehler signalisieren kann. Ein solches Fehlersignal Sₛₜₐₜ kann auch der Inhalt eines Registers oder eines Bits sein, der über eine digitale Schnittstelle, z.B. eine Datenschnittstelle ST, gelesen werden kann und dessen Wert durch die besagte Komponente erzeugt wird. Eine analoge Signalisierung über spezielle Leitungen ist natürlich auch möglich.

Von besonderer Wichtigkeit ist dabei, dass diese Komponente auch Fehlerbotschaften anderer System, die nicht Teil der Regelschaltung sind, empfangen können sollte. So sollte die Komponente vorzugsweise mit dem Fehlersignal einer weiteren erfindungsgemäßen Vorrichtung oder einer weiteren nicht erfindungsgemäßen Vorrichtung verkettet werden können. Dies ermöglicht es, dass beispielsweise ein Fehler an einem Modul, bestehend aus Regelschaltung und Verbrauchern, alle mittels Verkettung verbundenen Module abschalten kann. Besonders vorteilhaft ist es, wenn diese Verkettung beispielsweise mittels einer Wired-or-Schaltung und einem Pull-Up-Widerstand des Fehlersignals Sₛₜₐₜ geschieht.

Als Fehler-Modi, die besonders bevorzugt erkannt werden sollen, ist zu nennen
a) ein "Open-Fehler", bei dem eine Unterbrechung oder signifikante Einschränkung des Stromflusses durch einen Verbraucher erkannt wird, und
b) ein Kurzschluss, bei dem ein Verbraucher überbrückt ist oder einen massiv abgesenkten Innenwiderstand aufweist.

Ein Merkmal für einen "Open-Fehler" kann beispielsweise ein Ausgangsstrom I₃, I₄ sein, der kleiner als 10% oder 20% oder 30% oder 40% oder 50% eines vorgegeben Soll- oder Erwartungswertes ist. Hierbei hat sich ein Wert von kleiner als 30% als besonders vorteilhaft gezeigt.

Als ein Merkmal für einen Kurzschluss kann eine Ausgangsspannung U₃, U₄ verwendet werden, die an mindestens einem der Ausgänge 3, 4 der Regelschaltung 10 kleiner als ein vorgegebener Sollwert ist. Im Falle einer Stromversorgung für eine LED-Kette hängt dieser Sollwert von der Anzahl der LEDs ab. Er kann beispielsweise einen Wert von 0,5V oder 0,1V oder 1,5V aber auch andere Werte haben. Im Falle einer LED-Schaltung ist es übrigens sinnvoll, wenn mindestens einer der Widerstände R₃, R₄ einen Wert von Null Ohm oder nahezu Null Ohm hat. Dies ist so zu interpretieren, dass er einen Wert von weniger als 100hm oder besser weniger als 50hm oder besser weniger als 20hm oder besser weniger als 10hm oder besser weniger als 100mOhm habe sollte.

Wird nun ein solcher Fehler von extern mittels Signalisierung oder durch Messung oder durch Abweichung von einem Sollwert oder Sollwertbereich oder einem vorgegebenen zeitlichen Verlauf oder Verlauf-Bereichs eines der zuvor besprochenen Parameter und /oder einer der zuvor beschriebenen Regelgrößen und/oder einer aus diesen abgeleiteten Größe durch eine Komponente der Regelschaltung 10 erkannt, so besteht eine möglich Maßnahme, die eine optionale Steuerung innerhalb der Regelschaltung 10 ergreifen kann darin, dass die Energieversorgung zumindest eines Verbrauchers 11 in Form der durch die Regelschaltung 10 an diesen abgegebenen Energie reduziert oder eingestellt wird.

Eine besondere Form der Selbstdiagnose der erfindungsgemäßen Vorrichtung kann dadurch erfolgen, dass einer der Stromzweige, beispielsweise der zweite Anschluss 4 der Regelschaltung 10 nicht mit Strom versorgt wird und die Spannung an diesem Zweig, in diesem Beispiel die zweite Ausgangsspannung U₄, gemessen wird. Hierdurch kann der Zustand einer als Verbraucher 11 agierenden LED-Kette zuverlässiger bestimmt werden. Allerdings stellt eine solche Messung eine Störung des Betriebs dar. Daher kann diese Messung, wenn überhaupt, nur zeitweilig und typischerweise nur mit einem gewissen zeitlichen Mindestabstand und beispielsweise periodisch erfolgen. Eine mögliche eine Selbstdiagnose in Form einer Fehlererkennung erfolgt daher zumindest für einen möglichen Fehler nur zu bestimmten Zeiten und nicht kontinuierlich.

Natürlich ist es denkbar, mehrere erfindungsgemäße Regelschaltungen 10 beispielsweise für eine RGB-Licht-Regelung einzusetzen. Hierfür werden beispielsweise drei LED-Ketten in den Farben Rot, Grün und Blau benötigt. In dieser beispielhaften Ausprägung wird jede dieser LED-Ketten durch jeweils eine erfindungsgemäße Vorrichtung mit Energie versorgt. Für die Einstellung der richtigen Farbe ist es daher sinnvoll, für diesen Zweck diese Dreifach-Regelschaltung mit einem Farb-Sensor MF zu kombinieren. Dieser liefert typischerweise drei Ist-Werte, mit denen die jeweiligen Stromsummen I_{sum_r}, I_{sum_g} und I_{sum_b} nachgeregelt werden können. Als externer Sollwert können dann drei Werte vorgegeben werden, die je nach verwendeten Farbmodell durch einen Rechner in die Sollwerte I_{sum_r}, I_{sum_g} und I_{sum_b} umgerechnet werden. Natürlich ist auch die direkte Vorgabe der Sollwerte durch eine externe Beschaltung und/oder mittels einer Programmierung denkbar. Eine solche externe Beschaltung kann beispielsweise durch Referenzströme I_{ref_ext_1}, I_{ref_ext_2}, I_{ref_ext_3} erfolgen, die über externe Widerstände R_{ref_1}, R_{ref_2}, R_{ref_3} eingeprägt werden.

An dieser Stelle sei abschließend noch erwähnt, dass es bei geeigneter Ausgestaltung des externen Widerstands R₃, R₄, R_{4_1}, R_{4_2}, R_{4_3}, R₈ möglich ist, bei diesem Betriebstemperaturen zuzulassen, die weit über den Betriebstemperaturen liegen, die für Halbleiter und damit eine Realisierung der erfindungsgemäßen Regelschaltung 10 als integrierte Schaltung erlaubt sind. Auch kann der externe Widerstand R₃, R₄, R_{4_1}, R_{4_2}, R_{4_3}, R₈ an einem anderen Ort als die Regelschaltung 10 montiert werden. Dies erlaubt es, beispielsweise, durch eine geeignete thermische Isolation zwischen externem Widerstand R₃, R₄, R_{4_1}, R_{4_2}, R_{4_3}, R₈ und Regelschaltung 10 diese vor einer zu hohen Temperaturlast zu schützen. Der Widerstand fungiert damit als eine Art elektrischer Kühlkörper bezogen auf das System, was den Charakter der Erfindung besonders deutlich macht. Es ist daher ein Merkmal einer entsprechenden Ausprägung der Erfindung, dass ein externer Widerstand R₃, R₄, R₈, R_{4_1}, R_{4_2}, R₄ in einer solchen räumlichen Entfernung von der Regelschaltung 10 montiert oder thermisch sonst wie isoliert ist, so dass bei Erreichen der maximalen bestimmungsgemäßen Betriebstemperatur T_{R} des betreffenden externen Widerstands R₃, R₄, R₈, R_{4_1}, R_{4_2}, R₄ die Temperatur der Regelschaltung 10 im besten Fall um nicht mehr als 10°C oder schlechter nicht mehr als 20°C oder schlechter nicht mehr als 40°C oder schlechter nicht mehr als 80°C erhöht wird.

Auf der anderen Seite ist eine Kühlung dann besonders effektiv, wenn die Temperaturdifferenz zwischen dem externen Widerstand und seiner Kühlung, beispielsweise einem Kühlmittel oder einem Kühlkörper, maximiert wird. Dies kann durch Maximierung der zulässigen Betriebstemperatur des externen Widerstands geschehen. Es ist daher ein Merkmal einer Ausprägung der Erfindung, wenn ein externer Widerstand R₃, R₄, R₈, R_{4_1}, R_{4_2}, R_{4_3} in einem spezifikationskonformen Betriebszustand der Regelschaltung 10 eine Temperatur von T_{R} von größer als 150°C oder besser größer als 200°C oder besser größer als 250°C oder besser größer als 350°C oder besser größer als 450°C erreicht. In diesem Zusammenhang ist es beispielsweise denkbar, die Kühlung durch flüssiges Metall, also beispielsweise Blei oder Zinn etc. vorzunehmen. Dabei kann auch die Schmelzwärme ausgenutzt werden, wenn die Belastungen nur kurzzeitig sind. Die Vorrichtung ist daher in der Lage, sehr große Spitzenlasten erfolgreich zu regeln, was sie signifikant vom Stand der Technik unterscheidet.

Die Erfindung weist ferner ein oder mehrere Merkmale der nachfolgend aufgeführten Merkmalsgruppen oder eine oder mehrere der nachfolgend aufgelisteten Merkmalsgruppen auf:
1. Vorrichtung zur geregelten Versorgung eines Verbrauchers 11 mit elektrischer Energie durch eine Regelschaltung 10, wobei
   - die Regelschaltung 10 über mindestens vier Anschlüsse 1, 2, 3, 4, 8 verfügt,
   - der Verbraucher 11 über mindestens zwei Versorgungsanschlüsse verfügt 5, 6,
   - die Regelschaltung 10 über mindestens über zwei ihrer Anschlüsse 1, 2 aus einer geregelten oder ungeregelten Energiequelle 7 mit elektrischer Energie versorgt wird,
   - mindestens ein Ausgang 3, 4, 8 der Regelschaltung 10 über einen externen Widerstand R₃, R₄, R₈ mit mindestens einem ersten Anschluss 5 des Verbrauchers 11 elektrisch verbunden ist,
   - ein anderer Ausgang 3, 4, 8 der Regelschaltung 10 über einen externen Widerstand R₃, R₄, R₈ oder direkt mit dem besagten ersten Anschluss 5 des Verbrauchers 11 elektrisch verbunden ist,
   - der Verbraucher 11 mit zumindest einem weiteren zweiten Anschluss 6 mit der Energiequelle 7 oder einem weiteren Anschluss 2 der Regelschaltung 10 elektrisch verbunden ist,
   - bei dem Vorhandensein mindestens zweier externer Widerstände (R₃, R₄, R₈) diese unterschiedliche Werte haben,
   - die Summe der Ausgangsströme I₃+I₄, I₃+I₄+I₈ an den Ausgängen 3, 4, 8 der Regelschaltung 10 einem als Sollwert Iₛᵤₘ vorgegebenen Summenstrom I₃+I₄, I₃+I₄+I₈ entspricht und
   - die strombetragsmäßige Verteilung der Summe der Ausgangsströme I₃+I₄, I₃+I₄+I₈ auf die Ausgangsströme I₃, I₄, I₈ der Ausgänge 3, 4, 8 der Regelschaltung 10 von mindestens einem Regelparameter, d.h. einem Verteilungsparameter Vₚ, abhängig ist, der in der Regelschaltung 10 ermittelt wird oder von außen über eine analoge oder digitale Schnittstelle ST oder ein anderes Signal PWM vorgegeben wird.
2. Vorrichtung nach Ziffer 1, wobei die Regelschaltung 10 mindestens zwei Stromquellen IS₁, IS₂, IS₈ umfasst, die die Ausgangsströme I₃, I₄, I₈ liefern.
3. Vorrichtung nach Ziffer 1 oder 2, wobei die Regelschaltung mindestens eine Vorrichtung MI₃, MI₄, MI₈ umfasst, die zumindest zeitweise mindestens einen Ausgangsstrom I₃, I₄, I₈ misst.
4. Vorrichtung nach einer oder mehreren der Ziffern 1 bis 3, wobei die Regelschaltung mindestens eine Vorrichtung MU₃, MU₄, MU₈ umfasst, die mindestens eine Ausgangsspannung U₃, U₄, U₈ zumindest zeitweise an einem der Ausgänge 3, 4, 8 der Regelschaltung 10 misst.
5. Vorrichtung nach einer oder mehreren der Ziffern 1 bis 4, wobei die Regelschaltung mindestens eine Vorrichtung MU_{b} umfasst, die mindestens eine Versorgungsspannung U_{b} einer Regelschaltung 10 zumindest zeitweise misst.
6. Vorrichtung nach einer oder mehreren der Ziffern 1 bis 5, wobei die Regelschaltung mindestens eine Vorrichtung MP₃, MP₄, MP₈ umfasst, die mindestens eine Ausgangsleistung P₃, P₄, P₈ zumindest zeitweise an einem der Ausgänge 3, 4 der Regelschaltung 10 misst.
7. Vorrichtung nach einer oder mehreren der Ziffern 1 bis 6, wobei die Regelschaltung 10 mindestens eine Vorrichtung umfasst, die mindestens eine Temperatur T zumindest zeitweise
   - in der Regelschaltung 10 selbst und/oder
   - in Teilen der Regelschaltung 10 und/oder
   - in der Nähe der Regelschaltung 10 und/oder
   - in der Nähe zumindest eines Verbrauchers 11 und/oder
   - in der Nähe zumindest eines externen Widerstands R₃, R₄, R₈
   - in einem Kühlmittel oder einem Kühlmedium in der Nähe eines Widerstands R₃, R₄, R₈
   misst.
8. Vorrichtung nach einer oder mehreren der Ziffern 3 bis 7
   - wobei die Vorrichtung mindestens eine Komponente RG aufweist, die mindesten einen der gemessenen Werte oder einem zwischengespeicherten Messwert oder einem daraus abgeleiteten Wert mit mindestens einem zugehörigen Sollwert vergleicht,
   - wobei der Vergleich durch die Vorrichtung RG dadurch erfolgt, ob der besagte gemessene Wert kleiner als der Sollwert oder größer als der Sollwert oder auch optional gleich dem Sollwert ist, wobei gleich bedeutet, dass der gemessene Wert innerhalb eines Toleranzbands um den Sollwert liegt und alle Werte die innerhalb dieses Toleranzbandes liegen nicht als größer oder kleiner bewertet werden,
   - wobei mindestens einer der Messwerte
      - einer der Ausgangsströme I₃, I₄, I₈ oder
      - eine der Ausgangsspannungen U₃, U₄, U₈ oder
      - eine der Ausgangsleistungen P₃, P₄, P₈ oder
      - die Summe aller oder eines Teils der Ausgangsströme I₃+ I₄, I₃+ I₄+ I₈ oder
      - die Summe aller oder eines Teils der Ausgangsleistungen P₃+P₄, P₃+P₄+P₈ oder
      - die von der Energiequelle 7 zur Verfügung gestellten Betriebsspannung U_{b} oder
      - die Temperatur T der Regelschaltung 10 oder
      - die Temperatur T eines Teils der Regelschaltung 10 oder
      - die Temperatur T in der Nähe der Regelschaltung 10 oder
      - die Temperatur T in der Nähe zumindest eines Verbrauchers 11 oder
      - die Temperatur T in der Nähe zumindest eines externen Widerstands R3, R4, R8 oder
      - die Temperatur T in einem Kühlmittel oder einem Kühlmedium in der Nähe eines Widerstands R₃, R₄, R₈ oder
      - ein zwischengespeicherter Wert dieser Werte oder
      - eine aus diesen Werten und/oder deren zwischengespeicherten Werten abgeleitete Größe
      ist.
9. Vorrichtung nach einer oder mehreren der Ziffern 1 bis 8, wobei
   - mindestens ein Verteilungsparameter Vₚ
      - einer der Ausgangsströme I₃, I₄, I₈ oder
      - eine der Ausgangsspannungen U₃, U₄, U₈ oder
      - eine der Ausgangsleistungen P₃, P₄, P₈ oder
      - die Summe aller oder eines Teils der Ausgangsströme I₃+ I₄, I₃+ I₄+I₈ oder
      - die Summe aller oder eines Teils der Ausgangsleistungen P₃+P₄, P₃+P₄+P₈ oder
      - die Betriebsspannung U_{b} der Regelschaltung 10 oder
      - der Temperatur T der Regelschaltung 10 oder
      - der Temperatur T eines Teils der Regelschaltung 10 oder
      - der Temperatur T in der Nähe der Regelschaltung 10 oder
      - der Temperatur T in der Nähe zumindest eines Verbrauchers 11 oder
      - der Temperatur T in der Nähe zumindest eines externen Widerstands R₃, R₄, R₈ oder
      - der Temperatur T in einem Kühlmittels oder einem Kühlmediums in der Nähe eines Widerstands R₃, R₄, R₈ oder
      - ein zwischengespeicherter Wert der vorstehenden Werte oder
      - eine aus den vorstehenden Werten abgeleitete Größe oder
      - eine aus den zwischengespeicherten Werten der vorstehenden Werte abgeleitete Größe
      ist.
10. Vorrichtung nach einer oder mehreren der Ziffern 1 bis 9, wobei
   - die Summe von mindesten zwei Ausgangsströmen I₃+ I₄, I₃+I₄+I₈ von
      - mindestens einer der Ausgangsspannungen U₃, U₄, U₈ und/oder
      - mindestens einer der Ausgangsleistungen P₃, P₄, P₅ und/oder
      - der Summe aller oder eines Teils der Ausgangsleistungen P₃+P₄, P₃+P₄+P₈ und/oder
      - der von der Energiequelle 7 zur Verfügung gestellten Betriebsspannung U_{b} und/oder
      - der Temperatur T der Regelschaltung 10 und/oder
      - der Temperatur T eines Teils der Regelschaltung 10 und/oder
      - der Temperatur T in der Nähe der Regelschaltung 10 und/oder
      - der Temperatur T in der Nähe zumindest eines Verbrauchers 11 und/oder
      - der Temperatur T in der Nähe zumindest eines externen Widerstands R₃, R₄, R₈ und/oder
      - der Temperatur T in einem Kühlmittels oder einem Kühlmediums in der Nähe eines Widerstands R₃, R₄, R₈ und/oder
      - einem zwischen gespeichertem Wert dieser Werte und/oder
      - einer aus den vorstehenden Werten abgeleiteten Größe und/oder
      - einer aus den zwischengespeicherten Werten der vorstehenden Werte abgeleiteten Größe
      abhängt.
11. Vorrichtung nach einer oder mehreren der Ziffern 1 bis 10 und nach Ziffer 8, wobei
   - mindestens eine der besagten Komponenten FD der Ziffer 8 die Funktion einer Fehlerüberwachung hat und mindestens ein Fehlersignal Sₛₜₐₜ ausgibt oder auf Aufforderung ausgibt,
   - das Fehlersignal Sₛₜₐₜ einen Fehler signalisieren kann.
12. Vorrichtung nach einer oder mehreren der Ziffern 1 bis 11 und nach Ziffer 11, wobei
   - mindestens eine der besagten Komponenten FD des Anspruchs 11 mit dem Fehlersignal S_{stat_ext} einer weiteren erfindungsgemäßen Vorrichtung oder einer weiteren nicht erfindungsgemäßen Vorrichtung verkettet werden kann, sodass die Vorrichtung das Fehlersignal S_{stat_ext} der weiteren Vorrichtung als Fehler mittels des Fehlersignals Sstat ausgibt.
13. Vorrichtung nach Ziffer 12, wobei die Verkettung durch eine "wired-or"-Verknüpfung erfolgt.
14. Vorrichtung nach einer oder mehreren der Ziffern 11 bis 13, wobei mindestens einer der erkannten Fehler ein "Open-Fehler" oder ein Kurzschluss ist.
15. Vorrichtung nach Ziffer 14, wobei
   - ein "Open-Fehler" erkannt wird, wenn mindestens ein Ausgangsstrom I₃, I₄ kleiner als 10% oder 20% oder 30% oder 40% oder 50% eines Soll- oder Erwartungswertes ist oder
   - ein Kurzschluss erkannt wird, wenn die Ausgangsspannung U₃, U₄, U₈ an mindestens einem der Ausgänge 3, 4 der Regelschaltung 10 kleiner als ein Sollwert ist.
16. Vorrichtung nach Ziffer 15, wobei
   - ein Kurzschluss erkannt wird, wenn mindestens eine Ausgangsspannung U₃, U₄, U₈ an mindestens einem der Ausgänge 3, 4 der Regelschaltung 10 kleiner als 0,5V oder 0,1V oder 1,5V ist und
   - mindestens einer der Verbraucher eine LED oder eine Zusammenschaltung von LEDs ist und
   - einer der Ausgänge 3, 4, 8 der Regelschaltung 10 direkt mit einem ersten Anschluss 5 des Verbrauchers 11 verbunden ist.
17. Vorrichtung nach einer oder mehreren der Ziffern 11 bis 16, wobei im Falle eines Fehlers die Energieversorgung zumindest eines Verbrauchers in Form der durch die Regelschaltung an diesen abgegebenen Energie reduziert oder eingestellt wird.
18. Vorrichtung nach einer oder mehreren der Ziffern 11 bis 17, wobei eine Selbstdiagnose in Form einer Fehlererkennung durch mindestens eine Komponente FD zumindest für einen möglichen Fehler nur zu bestimmten Zeiten und nicht kontinuierlich erfolgt.
19. Vorrichtung nach einer oder mehreren der Ziffern 1 bis 18, wobei
   - mindestens ein Verbraucher 11
      - eine LED oder
      - mindestens teilweise eine Serienschaltung von LEDs 11, 11_1, 11_2, 11_3 oder
      - mindestens teilweise eine Parallelschaltung von LEDs ist.
20. Vorrichtung nach einer oder mehreren der Ziffern 1 bis 19, wobei
   - zumindest ein Ausgangsstrom I₄, I₈ eines Ausgangs 4, 8 der Regelschaltung 10 von der Betriebsspannung U_{b} abhängt , wobei auch Betriebsspannungsbereiche D umfasst sind, in den keine korrekte Funktion mehr erfolgt, und
   - dieser Ausgangsstrom I₄, I₄ in zumindest einem Betriebsspannungsbereich C, C1, C2 konstant ist.
21. Vorrichtung nach einer oder mehreren der Ziffern 1 bis 20, wobei
   - zumindest eine Stromsumme I₃+I₄ von mindestens zwei Ausgangsströmen I₄, I₃ zweier zugehöriger Ausgänge 3, 4 der Regelschaltung 10 von der Betriebsspannung U_{b} abhängt, wobei auch Betriebsspannungsbereiche D umfasst sind, in den keine korrekte Funktion mehr erfolgt, und
   - diese Stromsumme I₃+I₄, I₃+I₄+I₈ und/oder die Verbraucherverlustleistung P_{LED} in zumindest einem Betriebsspannungsbereich B, C, C1, C2 konstant ist und
   - zumindest einer der Ströme I₄ in zumindest einem der Spannungsbereich B nicht konstant ist in dem die Stromsumme I₃+I₄, I₃+I₄+I₈ und/oder die Verbraucherverlustleistung P_{LED} konstant ist.
22. Vorrichtung zur geregelten Versorgung mindestens zweier Verbraucher 11_1, 11_2 mit elektrischer Energie,
   - wobei die Vorrichtung mindestens zwei Regelschaltungen 10_1, 10_2 nach einer oder mehreren der Ziffern 1 bis 21 umfasst und
   - wobei mindestens ein Teil dieser mindestens zwei Regelschaltungen 10_1, 10_2 je mindestens einen der Verbraucher 11_1, 11_2 mit elektrischer Energie versorgt und
   - wobei dieser jeweilige Verbraucher 11_1, 11_2 nicht durch eine der anderen Regelschaltungen 10_1, 10_2 ebenfalls mit Energie versorgt wird.
23. Vorrichtung nach Ziffer 22, wobei die Referenzströme I_{ref_ext} für die Stromquellen von mindestens zwei der Regelschaltungen 10_1, 10_2 der Vorrichtung separat durch je ein externes Referenzsignal oder durch Programmierung eingestellt werden können.
24. Vorrichtung bestehend aus mindestens zwei oder drei Teilvorrichtungen 10_1, 10_2, 10_3 nach einer oder mehreren der Ziffern 1 bis 23
   - wobei jede Teilvorrichtung je eine LED-Kette 11_1, 11_2, 11_3 oder je eine andere Verschaltung lichterzeugender Bauteile mit elektrischer Energie versorgt und
   - wobei die LED-Ketten 11_1, 11_2, 11_3 oder anderen Verschaltungen lichterzeugender Bauteile mindestens einen räumlichen Bereich gemeinsam beleuchten und
   - wobei die LED-Ketten 11_1, 11_2, 11_3 oder anderen Verschaltungen lichterzeugender Bauteile jeweils in einer anderen Farbe oder Schwerpunktwellenlänge strahlen und
   - wobei die Vorrichtung zumindest einen Farb-Sensor MF aufweist und
   - wobei zumindest dieser Farb-Sensor MF mindestens einen Messwert für die Farbe zumindest eines Teils des aus dem beleuchteten Bereich zurückgestreuten Lichts und/oder des Lichts der LED-Ketten oder der anderen besagten lichterzeugenden Bauteile liefert und
   - wobei die jeweiligen Summenströme I₃+I₄ der jeweiligen Teilvorrichtungen in Abhängigkeit von dem mindestens einen Messwert des Farb-Sensors MF und mindestens einem zugehörigen Sollwert eingestellt werden.
25. Vorrichtung nach einer oder mehreren der Ziffern 1 bis 24
   - wobei mindestens ein externer Widerstand R₃, R₄, R₈, R_{4_1}, R_{4_2}, R_{4_3} in einer räumlichen Entfernung von der Regelschaltung 10 montiert oder thermisch sonst wie isoliert ist,
   - sodass bei Erreichen der maximalen Betriebstemperatur T_{R} des betreffenden externen Widerstands R₃, R₄, R₈, R_{4_1}, R_{4_2}, R_{4_3} die Temperatur der Regelschaltung 10 um nicht mehr als 10°C oder nicht mehr als 20°C oder nicht mehr als 40°C oder nicht mehr als 80°C erhöht wird.
26. Vorrichtung nach einer oder mehreren der Ziffern 1 bis 25, wobei mindestens ein externer Widerstand R₃, R₄, R₈, R_{4_1}, R_{4_2}, R_{4_3} in zumindest einem spezifikationskonformen Betriebszustand der Regelschaltung 10 eine Temperatur von T_{R} größer als 150°C oder größer als 200°C oder größer als 250°C oder größer als 350°C oder größer als 450°C erreicht.
27. Regelschaltung 10 zur Verwendung in einer Vorrichtung in einer oder mehreren der Ziffern 1 bis 26
   - wobei die Regelschaltung mindestens zwei Stromquellen IS3, IS4, IS8 umfasst und
   - die Summe der Ausgangsströme I₃+I₄, I₃+I₄+I₈ an den Ausgängen 3, 4, 8 der Regelschaltung 10 einem als Sollwert Iₛᵤₘ vorgegebenen Summenstrom I₃+I₄, I₃+I₄+I₈ entspricht und
   - die strombetragsmäßige Verteilung der Summe der Ausgangsströme I₃+I₄, I₃+I₄+I₈ auf die Ausgangsströme I₃, I₄, I₈ der Ausgänge 3, 4, 8 der Regelschaltung 10 von mindestens einem Regelparameter, d. h. einem Verteilungsparameter Vₚ, abhängig ist, der in der Regelschaltung 10 ermittelt wird oder von außen über eine analoge oder digitale Schnittstelle ST oder ein anderes Signal PWM vorgegeben wird.
28. Verfahren zur geregelten Versorgung eines Verbrauchers 11 mit elektrischer Energie durch eine Regelschaltung 10, wobei
   - die Regelschaltung 10 über mindestens vier Anschlüsse 1, 2, 3, 4, 8 verfügt,
   - der Verbraucher 11 über mindestens zwei Versorgungsanschlüsse verfügt 5, 6,
   - die Regelschaltung 10 über mindestens über zwei ihrer Anschlüsse 1, 2 aus einer geregelten oder ungeregelten Energiequelle 7 mit elektrischer Energie versorgt wird,
   - mindestens ein Ausgang 3, 4, 8 der Regelschaltung 10 über einen externen Widerstand R₃, R₄, R₈ mit mindestens einem ersten Anschluss 5 des Verbrauchers 11 elektrisch verbunden ist,
   - ein anderer Ausgang 3, 4, 8 der Regelschaltung 10 über einen externen Widerstand R₃, R₄, R₈ oder direkt mit dem besagten ersten Anschluss 5 des Verbrauchers 11 elektrisch verbunden ist,
   - der Verbraucher 11 mit zumindest einem weiteren zweiten Anschluss 6 mit der Energiequelle 7 oder einem weiteren Anschluss 2 der Regelschaltung 10 elektrisch verbunden ist,
   - bei dem Vorhandensein mindestens zweier externer Widerstände R₃, R₄, R₈ diese unterschiedliche Werte haben,
   - die Summe der Ausgangsströme I₃+I₄, I₃+I₄+I₈ an den Ausgängen 3, 4, 8 der Regelschaltung 10 einem als Sollwert Iₛᵤₘ vorgegebenen Summenstrom I₃+I₄, I₃+I₄+I₈ entspricht und
   - die strombetragsmäßige Verteilung der Summe der Ausgangsströme I₃+I₄, I₃+I₄+I₈ auf die Ausgangsströme I₃, I₄, I₈ der Ausgänge 3, 4, 8 der Regelschaltung 10 von mindestens einem Regelparameter, d. h. einem Verteilungsparameter Vₚ, abhängig ist, der in der Regelschaltung 10 ermittelt wird oder von außen über eine analoge oder digitale Schnittstelle ST oder ein anderes Signal PWM vorgegeben wird.
29. Verfahren nach Ziffer 24, wobei die Regelung mit Hilfe von mindestens zwei realen Stromquellen mit endlichen Innenwiderständen erfolgt, die die Ausgangsströme I₃, I₄, I₈ liefern.
30. Verfahren nach Ziffer 24 oder 29, wobei zumindest zeitweise mindestens ein Ausgangsstrom I₃, I₄, I₈ gemessen wird.
31. Verfahren nach einer oder mehreren der Ziffern 24 bis 30, wobei mindestens eine Ausgangsspannung U₃, U₄, U₈ zumindest zeitweise an einem der Ausgänge 3, 4, 8 der Regelschaltung 10 gemessen wird.
32. Verfahren nach einer oder mehreren der Ziffern 24 bis 31, wobei mindestens eine Versorgungsspannung U_{b} einer Regelschaltung 10 gemessen wird.
33. Verfahren nach einer oder mehreren der Ziffern 24 bis 32, wobei mindestens eine Ausgangsleistung P₃, P₄, P₈ zumindest zeitweise an einem der Ausgänge 3, 4, 8 der Regelschaltung 10 gemessen wird.
34. Verfahren nach einer oder mehreren der Ziffern 24 bis 33, wobei
   - mindestens eine Temperatur T zumindest zeitweise
      - in der Regelschaltung 10 selbst oder
      - in Teilen der Regelschaltung 10 oder
      - in der Nähe der Regelschaltung 10 oder
      - in der Nähe zumindest eines Verbrauchers 11 oder
      - in der Nähe eines externen Widerstands R₃, R₄, R₈ oder
      - in einem Kühlmittels oder einem Kühlmediums in der Nähe eines Widerstands R₃, R₄, R₈
      gemessen wird.
35. Verfahren nach einer oder mehreren der Ziffern 30 bis 34
   - wobei mindesten einer der gemessenen Werte oder mindestens einer der zwischengespeicherten Werte oder mindestens einer aus diesen abgeleiteten Werte (besagte Werte) mit mindestens einem Sollwert verglichen wird,
   - wobei der Vergleich dadurch erfolgt, dass festgestellt wird ob der besagte Wert kleiner als der Sollwert oder größer als der Sollwert oder auch optional gleich dem Sollwert ist, wobei gleich bedeutet, dass der besagte Wert innerhalb eines Toleranzbands um den Sollwert liegt und ein besagter Wert, der innerhalb dieses Toleranzbandes liegt nicht als größer oder kleiner im Rahmen des besagten Vergleichs bewertet wird,
   - wobei mindestens einer der besagten Werte
      - einer der Ausgangsströme I₃, I₄, I₈ oder
      - eine der Ausgangsspannungen U₃, U₄, U₈ oder
      - eine der Ausgangsleistungen P₃, P₄, P₈ oder
      - die Summe aller oder eines Teils der Ausgangsströme I₃+ I₄, I₃+ I₄+ I₈ oder
      - die Summe aller oder eines Teils der Ausgangsleistungen P₃+P₄, P₃+P₄+P₈ oder
      - die von der Energiequelle 7 zur Verfügung gestellten Betriebsspannung U_{b} oder
      - die Temperatur T der Regelschaltung 10 oder
      - die Temperatur T eines Teils der Regelschaltung 10 oder
      - die Temperatur T in der Nähe der Regelschaltung 10 oder
      - die Temperatur T in der Nähe zumindest eines Verbrauchers 11 oder
      - die Temperatur T in der Nähe zumindest eines externen Widerstands R₃, R₄, R₈ oder
      - die Temperatur T in einem Kühlmittel oder einem Kühlmedium in der Nähe eines Widerstands R₃, R₄, R₈ oder
      - ein zwischengespeicherter Wert dieser Werte oder
      - eine aus diesen Werten und/oder deren zwischengespeicherten Werten abgeleitete Größe
      ist.
36. Verfahren nach einer oder mehreren der Ziffern 24 bis 35, wobei
   - mindestens ein Verteilungsparameter Vₚ
      - einer der Ausgangsströme I₃, I₄, I₈ oder
      - eine der Ausgangsspannungen U₃, U₄, U₈ oder
      - eine der Ausgangsleistungen P₃, P₄, P₈ oder
      - die Summe aller oder eines Teils der Ausgangsströme I₃+ I₄, I₃+ I₄+ I₈ oder
      - die Summe aller oder eines Teils der Ausgangsleistungen P₃+P₄, P₃+P₄+P₈ oder
      - die von der Energiequelle 7 zur Verfügung gestellten Betriebsspannung U_{b} oder
      - die Temperatur T der Regelschaltung 10 oder
      - die Temperatur T eines Teils der Regelschaltung 10 oder
      - die Temperatur T in der Nähe der Regelschaltung 10 oder
      - die Temperatur T in der Nähe zumindest eines Verbrauchers 11 oder
      - die Temperatur T in der Nähe zumindest eines externen Widerstands R₃, R₄, R₈ oder
      - die Temperatur T in einem Kühlmittel oder einem Kühlmedium in der Nähe eines Widerstands R₃, R₄, R₈ oder
      - ein zwischen gespeicherter Wert der vorstehenden Werte oder
      - eine aus diesen vorstehenden Werten abgeleitete Größe oder
      - eine aus zwischengespeicherten Werten der vorstehenden Werte abgeleitete Größe
      ist.
37. Verfahren nach einer oder mehreren der Ziffern 24 bis 36, wobei
   - die Summe von mindesten zwei Ausgangsströmen I₃+I₄, I₃+ I₄+ I₈ in Abhängigkeit von
      - mindestens einer der Ausgangsspannungen U₃, U₄, U₈ und/oder
      - mindestens einer der Ausgangsleistungen P₃, P₄, P₈ und/oder
      - der Summe aller oder eines Teils der Ausgangsleistungen P₃+P₄, P₃+P₄+P₈ und/oder
      - der von der Energiequelle 7 zur Verfügung gestellten Betriebsspannung U_{b} und/oder
      - der Temperatur T der Regelschaltung 10 und/oder
      - der Temperatur T eines Teils der Regelschaltung 10 und/oder
      - der Temperatur T in der Nähe der Regelschaltung 10 und/oder
      - der Temperatur T in der Nähe zumindest eines Verbrauchers 11 und/oder
      - der Temperatur in der Nähe zumindest eines externen Widerstands R₃, R₄, R₈ und/oder
      - der Temperatur T in einem Kühlmittel oder einem Kühlmedium in der Nähe eines Widerstands R₃, R₄, R₈ und/oder
      - einem zwischengespeichertem Wert dieser Werte und/oder
      - einer aus den vorstehenden Werten abgeleiteten Größe und/oder
      - einer von deren zwischengespeicherten den vorstehenden Werten abgeleiteten Größe
      geregelt wird.
38. Verfahren nach einer oder mehreren der Ziffern 24 bis 37 und nach Ziffer 35, wobei
   - durch den Vergleich eines Messwertes mit einem Sollwert entsprechend Ziffer 35 eine Fehlerüberwachung und/oder Fehlererkennung durchgeführt wird und
   - wobei mindestens ein Fehlersignal Sₛₜₐₜ erzeugt wird, das zur Signalisierung eines Fehlers dient, wenn dieser durch den besagten Vergleich festgestellt wird.
39. Verfahren nach einer oder mehreren der Ziffern 24 bis 38 und nach Ziffer 38, wobei
   - mindestens ein externes Fehlersignal S_{stat_ext} empfangen wird und
   - auch dann ein Fehlersignal Sₛₜₐₜ, das zur Signalisierung eines Fehlers dient, erzeugt wird, also ein Fehler signalisiert wird, wenn mindestens ein empfangenes externes Fehlersignal S_{stat_ext} einen anderen Fehler signalisiert.
40. Verfahren nach einer oder mehreren der Ziffern 38 bis 39, wobei mindestens einer der erkannten Fehler ein "Open-Fehler" oder ein Kurzschluss ist.
41. Verfahren nach Ziffer 40, wobei
   - ein "Open-Fehler" erkannt wird, wenn mindestens ein gemessener Ausgangsstrom I₃, I₄, I₈ kleiner als 10% oder 20% oder 30% oder 40% oder 50% eines Soll- oder Erwartungswertes ist oder
   - ein Kurzschluss erkannt wird, wenn mindesten eine gemessene Ausgangsspannung U₃, U₄, U₈ kleiner als ein Sollwert ist.
42. Verfahren nach Ziffer 41, wobei ein Kurzschluss erkannt wird, wenn mindestens eine Ausgangsspannung U₃, U₄, U₈ kleiner als 0,5V oder 0,1V oder 1,5V ist
43. Verfahren nach einer oder mehreren der Ziffern 38 bis 42, wobei im Falle eines Fehlers die Energieversorgung zumindest eines Verbrauchers in Form der durch die Regelschaltung an diesen abgegebenen Energie reduziert oder eingestellt wird.
44. Verfahren nach einer oder mehreren der Ziffern 38 bis 43, wobei eine Selbstdiagnose in Form einer Fehlererkennung zumindest für einen möglichen Fehler nur zu bestimmten Zeiten und nicht kontinuierlich erfolgt.
45. Verfahren nach einer oder mehreren der Ziffern 24 bis 44, wobei zumindest ein Ausgangsstrom I₄ in zumindest einem Betriebsspannungsbereich C konstant ausgeregelt wird.
46. Verfahren nach einer oder mehreren der Ziffern 24 bis 45, wobei
   - zumindest eine Stromsumme I₃+I₄, I₃+ I₄+ I₈ von mindestens zwei Ausgangsströmen I₄, I₃, I₈ in zumindest einem Betriebsspannungsbereich B, C, C1, C2 konstant gehalten wird und
   - zumindest einer der Ströme I₄ in zumindest einem der Betriebsspannungsbereiche B nicht konstant ausgeregelt wird in dem die besagte Stromsumme I₃+I₄, I₃+ I₄+ I₈ von mindestens zwei Ausgangsströmen I₄, I₃, I₈ konstant gehalten wird,
   - wobei der letztere Betriebsspannungsbereich B ein Teil des zuerst genannten Betriebsspannungsbereiches B, C, C1, C2 ist oder mit diesem gleich ist.
47. Verfahren zur geregelten Versorgung mindestens zweier Verbraucher 11_1, 11_2, 11_3 mit elektrischer Energie, wobei mindestens ein Teil dieser der Verbraucher 11_1, 11_2, 11_3 jeweils mittels eines Verfahren nach einer oder mehreren der Ziffern 24 bis 46 mit elektrischer Energie versorgt wird.
48. Verfahren nach Ziffer 47, wobei mindestens zwei Ausgangsströme I₃, I₄, I₈ durch je ein externes Referenzsignal I_{ref_ext_1}, I_{ref_ext_2}, I_{ref_ext_3} oder durch Programmierung eingestellt werden.

**Bezugszeichenliste**

| Bezugszeichen | Beschreibung |
|---|---|
| 1 | Versorgungsspannungsanschluss der erfindungsgemäßen Regelschaltung 10 |
| 2 | Masseanschluss der erfindungsgemäßen Regelschaltung 10 (Bezugspotenzial) |
| 3 | Erster Ausgang der Regelschaltung 10 |
| 3_1 | Erster Ausgang der Regelschaltung 10_1 für rot |
| 3_2 | Erster Ausgang der Regelschaltung 10_2 für grün |
| 3_3 | Erster Ausgang der Regelschaltung 10_3 für blau |
| 4 | Zweiter Ausgang der Regelschaltung 10 |
| 4_1 | Zweiter Ausgang der Regelschaltung 10_1 für rot |
| 4_2 | Zweiter Ausgang der Regelschaltung 10_2 für grün |
| 4_3 | Zweiter Ausgang der Regelschaltung 10_3 für blau |
| 5 | Erster Anschluss des Verbrauchers 11 |
| 5_1 | Erster Anschluss der roten LED Kette 11_1 |
| 5_2 | Erster Anschluss der grünen LED Kette 11_2 |
| 5_3 | Erster Anschluss der blauen LED Kette 11_3 |
| 6 | Zweiter Anschluss des Verbrauchers 11 |
| 6_1 | Zweiter Anschluss der roten LED Kette 11_1 |
| 6_2 | Zweiter Anschluss der grün LED Kette 11_2 |
| 6_3 | Zweiter Anschluss der blau LED Kette 11_3 |
| 7 | Energiequelle |
| 8 | Dritter Ausgang der Regelschaltung 10 |
| 9 | Vierter Ausgang der Regelschaltung 10 |
| 10 | Regelschaltung |
| 10_1 | Regelschaltung der roten LED-Kette 11_1 |
| 10_2 | Regelschaltung der grünen LED-Kette 11_2 |
| 10_3 | Regelschaltung der blauen LED-Kette 11_3 |
| 11 | Verbraucher. Der Verbraucher kann auch ein Netzwerk von Verbrauchern sein. Insbesondere kann es sich um eine LED oder eine Serien- oder Parallelschaltung von LEDs handeln. |
| 11_1 | Rote LED-Kette als Verbraucher 11 |
| 11_2 | Grüne LED-Kette als Verbraucher 11 |
| 11_3 | Blaue LED-Kette als Verbraucher 11 |
| 12 | Ohmsche Last |
| 13 | Induktive Last |
| 14 | Freilaufdiode für die induktive Last 13 |
| 15 | Überspannungsschutzdiode für die induktive Last 13 |
| 16 | Kapazitive Last |
| A | Erster Betriebsspannungsbereich |
| ADC | Analog-zu-Digital-Converter |
| B | Zweiter Betriebsspannungsbereich |
| C | Dritter Betriebsspannungsbereich |
| C1 | Erste Hälfte des dritten Betriebsspannungsbereiches, in dem an einem der externen Widerstände R₄, R₈ die Leistung konstant ist. |
| C2 | Zweite Hälfte des dritten Betriebsspannungsbereiches, in dem an beiden externen Widerständen R₄, R₈ die Leistung konstant ist. |
| CTR | Controller zur Steuerung der Regelschaltung 10 |
| D | Vierter Betriebsspannungsbereich |
| FD | Fehler-Detektion. Die Fehler-Detektion erhält Messwerte von den verschiedenen Messinstrumenten und die Fehlersignale S_{stat_ext} der externen Signalisierer. Daraus ermittelt die Fehler-Detektion den Zustand des Systems. Bei Vorleigen eines Fehlers wird dieser erkannt und das System in einen sichereren Betriebszustand gebracht. Die Fehler-Detektion setzt sich dabei gegen andere Regler und Vorgaben in der Regel durch. Die Fehler-Detektion signalisiert nach außen einen fehlerhaften Zustand über das Fehlersignal Sₛₜₐₜ. |
| FR | Farbregelung Die Farbregelung erhält von mindestens einem Farbensensor MF mindestens einen Messwert und erzeugt daraus SollWerte für die verschiedenen Regelschaltungen 10_1, 10_2, 10_3 |
| I₃ | Ausgangsstrom des ersten Ausgangs 3 der Regelschaltung 10 |
| I₄ | Ausgangsstrom des zweiten Ausgangs 4 der Regelschaltung 10 |
| I₈ | Ausgangsstrom des dritten Ausgangs 8 der Regelschaltung 10 |
| (I₃+I₄) | Summe der Ausgangsströme und zwar des Ausgangsstroms I₄ des zweiten Ausgangs 4 und des Ausgangsstroms I₃ des ersten Ausgangs 3 |
| (I₃+I₄+I₈) | Summe der Ausgangsströme und zwar des Ausgangsstroms I₈ des dritten Ausgangs 8 und des Ausgangsstroms I₄ des zweiten Ausgangs 4 und des Ausgangsstroms I₃ des ersten Ausgangs 3. Diese Stromsumme wird bei drei Stromquellen IS₃, IS₄, IS₈ verwendet. Bei mehr Stromquellen wird die Summe entsprechend erweitert. |
| intRef | Interne Referenzen |
| I_{ref_int} | Interner Referenzstrom für die Vorgabe der Stromsumme I₃+I₄, I₃+I₄+I₈. |
| IS₃ | Erste geregelte Stromquelle, die den Strom I₃ liefert. |
| IS₄ | Zweite geregelte Stromquelle, die den Strom I₄ liefert. |
| IS₈ | Dritte geregelte Stromquelle, die den Strom I₈ liefert. |
| Iₛᵤₘ | Sollwert für die Stromsumme I₃+I_{4,}, I₃+I₄+I_{8,}. |
| I_{ref_ext} | Externer Referenzstrom |
| LED | Leuchtdiode |
| MF | Farb-Sensor |
| MI₃ | Erste Strommessvorrichtung für die Messung des Stromes I₃ |
| MI₄ | Zweite Strommessvorrichtung für die Messung des Stromes I₄ |
| MI₈ | Dritte Strommessvorrichtung für die Messung des Stromes I₈ |
| MU₃ | Erste Spannungsmessvorrichtung für die Messung der Spannung zwischen dem ersten Ausgang 3 der Regelschaltung 10 und dem Masseanschluss 2 der Regelschaltung 10 |
| MU₄ | Zweite Spannungsmessvorrichtung für die Messung der Spannung zwischen dem zweiten Ausgang 4 der Regelschaltung 10 und dem Masseanschluss 2 der Regelschaltung 10 |
| MU₈ | Dritte Spannungsmessvorrichtung für die Messung der Spannung zwischen dem dritten Ausgang 8 der Regelschaltung 10 und dem Masseanschluss 2 der Regelschaltung 10 |
| MP₃ | Erste Leistungsmessvorrichtung für die Messung der abgegebenen Leistung an dem Tor bestehend zwischen dem ersten Ausgang 3 der Regelschaltung 10 und dem Masseanschluss 2 der Regelschaltung 10 |
| MP₄ | Zweite Leistungsmessvorrichtung für die Messung der abgegebenen Leistung an dem Tor bestehend zwischen dem zweiten Ausgang 4 der Regelschaltung 10 und dem Masseanschluss 2 der Regelschaltung 10 |
| MP₈ | Dritte Leistungsmessvorrichtung für die Messung der abgegebenen Leistung an dem Tor bestehend zwischen dem dritten Ausgang 8 der Regelschaltung 10 und dem Masseanschluss 2 der Regelschaltung 10 |
| MT | Temperaturmessvorrichtung, die die Temperatur beispielsweise in der Regelschaltung 10 selbst und/oder in Teilen der Regelschaltung 10 und/oder in der Nähe der Regelschaltung 10 und/oder in der Nähe zumindest eines Verbrauchers 11 und/oder in der Nähe eines externen Widerstands R₃, R₄, R₈ misst. |
| MU_{b} | Betriebsspannungsmessvorrichtung für die Messung der Betriebsspannung U_{b} |
| P₃ | Leistung, die durch die Regelschaltung 10 über den ersten Ausgang 3 abgegeben wird. |
| P₄ | Leistung, die durch die Regelschaltung 10 über den zweiten Ausgang 4 abgegeben wird. |
| P₈ | Leistung, die durch die Regelschaltung 10 über den dritten Ausgang 8 abgegeben wird. |
| P₃+P₄ | Summe der Ausgangsleistungen des ersten Ausgangs P₃ und des zweiten Ausgangs P₄ |
| P₃+P₄+P₈ | Summe der Ausgangsleistungen des ersten Ausgangs P₃ und des zweiten Ausgangs P₄ und des dritten Ausgangs P₈ |
| P₁₀ | Leistungsverlust in der Regelschaltung 10 |
| P_{LED} | Verlustleistung der LEDs (des Verbrauchers 11), Verbraucherverlustleistung |
| P_{R4} | Verlustleistung des zweiten externen Widerstands R₄ |
| P_{R8} | Verlustleistung des dritten externen Widerstands R₈ |
| PWM | PulsWeitenModulation |
| R₃ | Erster externer Widerstand |
| R₄ | Zweiter externer Widerstand |
| R_{4_1} | Zweiter externer Widerstand der roten LED-Kette 11_1 |
| R_{4_2} | Zweiter externer Widerstand der grünen LED-Kette 11_2 |
| R_{4_3} | Zweiter externer Widerstand der blauen LED-Kette 11_3 |
| R₈ | Dritter externer Widerstand |
| RefG | Referenzerzeugung aus den externen Referenzströmen I_{ref_ext_1}, I_{ref_ext_2}, I_{ref_ext_3}, Die Ströme werden dabei über die Widerstände R_{ref_1}, R_{ref_2}, R_{ref_3}, eingestellt. Die Ströme können zur Grundeinstellung der Teilvorrichtungen 10_1, 10_2, 10_3 mittels des Blocks RefG verwendet werden. |
| RG | Regler |
| R_{ref} | Referenzwiderstand |
| Sₛₜₐₜ | Fehlersignal |
| S_{stat_ext} | Externes Fehlersignal (ein Eingangssignal der Regelschaltung 10) |
| ST | Datenschnittstelle |
| SUP | Versorgung der Regelschaltung 10 aus der Betriebsspannungsversorgung U_{b} |
| T | Temperatur. Hier handelt es sich um ein Zeichen für eine oder mehrere der folgenden Temperaturen: |
| | die Temperatur T der Regelschaltung 10 |
| | die Temperatur eines Teils der Regelschaltung 10 |
| | die Temperatur in der Nähe der Regelschaltung 10 |
| | die Temperatur in der Nähe eines Verbrauchers 11 |
| | die Temperatur in der Nähe eines Widerstands R₃, R₄ |
| T_{R} | Temperatur eines externen Widerstands R₃, R₄, R_{4_3}, R_{4_2}, R_{4_1}, R₈ |
| U₃ | Erste Ausgangsspannung, Spannung zwischen erstem Ausgang 3 und Masseanschluss 2 |
| U₄ | Zweite Ausgangsspannung, Spannung zwischen zweitem Ausgang 4 und Masseanschluss 2 |
| U₈ | Dritte Ausgangsspannung, Spannung zwischen drittem Ausgang 8 und Masseanschluss 2 |
| U_{b} | Betriebsspannung. Dies ist die Spannung zwischen dem Versorgungsspannungsanschluss 1 der Regelschaltung 10 und dem Masseanschluss 2 der Regelschaltung. Die Betriebsspannung wird von der Energieversorgung 7 bereitgestellt. |
| Vₚ | Verteilungsparameter |

## Patentansprüche

1. Vorrichtung zur Versorgung mindestens eines einen ersten Anschluss aufweisenden Verbrauchers mit elektrischer Energie bzw. zur Bereitstellung elektrischer Leistung für mindestens einen einen ersten Anschluss aufweisenden Verbraucher aus einem Kfz-Bordnetz, mit
- einer als IC ausgeführten Regelschaltung (10) mit einem Eingang (1), über den der Regelschaltung (10) aus dem Kfz-Bordnetz elektrische Energie zuführbar ist, und mindestens einem ersten Ausgang (3) und einem zweiten Ausgang (4), wobei über jeden dieser beiden Ausgänge (3,4) ein Verbraucher (11) über seinen ersten Anschluss von der Regelschaltung (10) aus dem Kfz-Bordnetz mit elektrischer Energie versorgbar ist bzw. die Regelschaltung (10) elektrische Leistung für einen Verbraucher (11) zur Verfügung stellt, indem der erste Ausgang (3) der Regelschaltung (10) direkt und der zweite Ausgang (4) der Regelschaltung (10) über einen externen Widerstand mit demselben einzelnen Verbraucher (11) in elektrischer Verbindung steht,
- mindestens einem außerhalb des ICs angeordneten, externen Widerstand (R₃, R₄, R₈) zur außerhalb des ICs erfolgenden Abgabe von potentieller elektrischer Verlustleistung, wobei einerseits der externe Widerstand (R₃, R₄, R₈) mit dem zweiten Ausgang (4) der Regelschaltung (10) verbunden ist und andererseits an den externen Widerstand (R₃, R₄, R₈) der Verbraucher (11) anschließbar ist,
- wobei der Sollwert der von der Regelschaltung (10) zu regelnden elektrischen Leistung des Verbrauchers (11) vorgebbar ist und
- wobei die Aufteilung der elektrischen Energie für den Verbraucher (11) bzw. der für diesen zur Verfügung zu stellenden elektrischen Leistung auf die mindestens zwei Ausgänge (R₃, R₄) der Regelschaltung (10) von dieser in Abhängigkeit von mindestens einem Aufteilungsparameter (Vₚ) steuerbar ist, der der Regelschaltung (10) zuführbar oder der in der Regelschaltung (10) ermittelbar ist.

2. Vorrichtung nach Anspruch 1, **dadurch gekennzeichnet, dass** mit dem zweiten Ausgang (3, 4) und/oder mit mindestens einem weiteren Ausgang (3, 4) der Regelschaltung (10) ein bzw. jeweils ein weiterer externer Widerstand (R₃, R₄, R₈) verbunden ist, an den bzw. an die der Verbraucher anschließbar ist, wobei die Werte der externen Widerstände (R₃, R₄, R₈) gleich oder ungleich und/oder gruppenweise gleich oder von Gruppe zu Gruppe ungleich sind.

3. Vorrichtung nach Anspruch 1 oder 2, **dadurch gekennzeichnet, dass** die Regelschaltung (10) pro Ausgang (3, 4) ein Leistungsbereitstellungs- und -Messmodul aufweist, das eine regelbare Strom- und/oder Spannungsquelle und eine Messeinheit aufweist, wobei die Messeinheit einen oder mehrere Parameter ermittelt, die zumindest eine bzw. die mehrere der nachfolgend genannten, elektrischen Größen repräsentiert/ repräsentieren:
- Ausgangsströme, Ausgangsspannungen und Ausgangsleistungen an den Ausgängen (3, 4) der Regelschaltung (10) und
- Versorgungsspannung und Versorgungsstrom der Regelschaltung (10).

4. Vorrichtung nach einem der Ansprüche 1 bis 3, **dadurch gekennzeichnet**, die zu regelnde elektrische Leistung des Verbrauchers (11) als ein Soll-Summenstrom vorgebbar ist, auf den die Summe der über die Ausgänge (3, 4) fließenden Ausgangsströme regelbar ist.

5. Vorrichtung nach einem der Ansprüche 1 bis 4, **gekennzeichnet durch** eine Einheit (T), die zumindest zeitweise eine Temperatur erfasst, und zwar von zumindest einem Element aus der Gruppe der nachfolgend genannten Elemente:
- der Regelschaltung (10) oder einem Teil der Regelschaltung (10) oder benachbart zur Regelschaltung (10),
- des Verbrauchers (11) oder benachbart zum Verbraucher (11),
- mindestens einer der externen Widerstände (R₃, R₄, R₈) und in der Nähe mindestens eines der externen Widerstände (R₃, R₄, R₈) und
- ein Kühlmittel für mindestens einen der externen Widerstände (R₃, R₄, R₈).

6. Vorrichtung nach einem der Ansprüche 1 bis 5, **dadurch gekennzeichnet, dass** der mindestens eine Aufteilungsparameter (Vₚ) eine der nachfolgende genannten Größen ist und/oder auf mindestens einer der nachfolgend genannten Größen basiert:
- mindestens einer der Ausgangsströme (I₃, I₄, I₈), eine der Ausgangsspannungen (U₃, U₄, U₈), eine der Ausgangsleistungen (P₃, P₄, P₈),
- die Summe von mindestens zwei Ausgangsströmen (E₃, E₄, E₈), Ausgangsspannungen (U₃, U₄, U₈), Ausgangsleistungen (P₃, P₄, P₈),
- die Betriebsspannung (U_{b}) der Regelschaltung (10),
- die Temperatur (T) der Regelschaltung (10), eines Teils der Regelschaltung (10) oder in der Nähe der Regelschaltung (10),
- die Temperatur (T) eines Verbrauchers (11) oder eines Teils des Verbrauchers (11) oder in der Nähe des Verbrauchers (11),
- die Temperatur (T) mindestens eines externen Widerstandes (R₃, R₄, R₈) oder in der Nähe mindestens eines der externen Widerstände (R₃, R₄, R₈),
- die Temperatur (T) eines Kühlmediums für mindestens einen der externen Widerstände (R₃, R₄, R₈),
- ein zwischengespeicherter Wert mindestens einer der vorgenannten Größen,
- ein aus mindestens einer der vorgenannten Größen abgeleiteter, insbesondere zeitlich abgeleiteter Wert und
- ein aus einer Zwischenspeicherung mindestens einer der zuvor genannten Größen abgeleiteter, insbesondere zeitlich abgeleiteter Wert.

7. Vorrichtung nach einem der Ansprüche 1 bis 6, **dadurch gekennzeichnet, dass** die Größe der von der Regelschaltung (10) für den Verbraucher (11) zur Verfügung zu stellenden, geregelten Leistung abhängig ist von einer der nachfolgend genannten Größen:
- mindestens einer der Ausgangsströme (I₃, I₄, I₈), eine der Ausgangsspannungen (U₃, U₄, U₈), eine der Ausgangsleistungen (P₃, P₄, P₈),
- die Summe von mindestens zwei Ausgangsströmen (E₃, E₄, E₈), Ausgangsspannungen (U₃, U₄, U₈), Ausgangsleistungen (P₃, P₄, P₈),
- die Betriebsspannung (U_{b}) der Regelschaltung (10),
- die Temperatur (T) der Regelschaltung (10), eines Teils der Regelschaltung (10) oder in der Nähe der Regelschaltung (10),
- die Temperatur (T) eines Verbrauchers (11) oder eines Teils des Verbrauchers (11) oder in der Nähe des Verbrauchers (11),
- die Temperatur (T) mindestens eines externen Widerstandes (R₃, R₄, R₈) oder in der Nähe mindestens eines der externen Widerstände (R₃, R₄, R₈),
- die Temperatur (T) eines Kühlmediums für mindestens einen der externen Widerstände (R₃, R₄, R₈),
- ein zwischengespeicherter Wert mindestens einer der vorgenannten Größen,
- ein aus mindestens einer der vorgenannten Größen abgeleiteter, insbesondere zeitlich abgeleiteter Wert und
- ein aus einer Zwischenspeicherung mindestens einer der zuvor genannten Größen abgeleiteter, insbesondere zeitlich abgeleiteter Wert.

8. Vorrichtung nach einem der Ansprüche 1 bis 7, **dadurch gekennzeichnet, dass** mindestens eine Komponente (RG) vorgesehen ist, die mindestens einen Messwert, einen zwischengespeicherten Messwert oder einen aus einem dieser Messwerte abgeleiteten Wert mit mindestens einem Sollwert dahingehend vergleicht, ob der Messwert oder der abgeleitete Wert innerhalb oder außerhalb eines vorgebbaren Toleranzbereichs um den Sollwert liegt, wobei der mindestens eine Messwert oder abgeleitete Wert eine der nachfolgend genannten Größen ist oder auf dieser basiert:
- mindestens einer der Ausgangsströme (I₃, I₄, I₈), eine der Ausgangsspannungen (U₃, U₄, U₈), eine der Ausgangsleistungen (P₃, P₄, P₈),
- die Summe von mindestens zwei Ausgangsströmen (E₃, E₄, E₈), Ausgangsspannungen (U₃, U₄, U₈), Ausgangsleistungen (P₃, P₄, P₈),
- die Betriebsspannung (U_{b}) der Regelschaltung (10),
- die Temperatur (T) der Regelschaltung (10), eines Teils der Regelschaltung (10) oder in der Nähe der Regelschaltung (10),
- die Temperatur (T) eines Verbrauchers (11) oder eines Teils des Verbrauchers (11) oder in der Nähe des Verbrauchers (11),
- die Temperatur (T) mindestens eines externen Widerstandes (R₃, R₄, R₈) oder in der Nähe mindestens eines der externen Widerstände (R₃, R₄, R₈),
- die Temperatur (T) eines Kühlmediums für mindestens einen der externen Widerstände (R₃, R₄, R₈),
- ein zwischengespeicherter Wert mindestens einer der vorgenannten Größen,
- ein aus mindestens einer der vorgenannten Größen abgeleiteter, insbesondere zeitlich abgeleiteter Wert und
- ein aus einer Zwischenspeicherung mindestens einer der zuvor genannten Größen abgeleiteter, insbesondere zeitlich abgeleiteter Wert.

9. Vorrichtung nach Anspruch 8, **dadurch gekennzeichnet, dass** mindestens eine der Komponenten eine Fehlerüberwachungskomponente (FD) mit der Funktion einer Fehlerüberwachung ist, die mindestens ein einen Fehler signalisierendes Fehlersignal (Sₛₜₐₜ) ausgibt oder auf eine Anforderung hin ausgibt, wobei der Fehler ein Kurzschluss oder eine Leitungs- bzw. Verbindungsunterbrechung sein kann.

10. Vorrichtung nach Anspruch 9, **dadurch gekennzeichnet, dass** die mindestens eine Fehlerüberwachungskomponente (FD) mit einer Fehlerüberwachungskomponente (FD) einer anderen Vorrichtung zur Versorgung mindestens eines Verbrauchers mit elektrischer Energie bzw. Leistung und/oder mit einer andere Vorrichtung mit anderer Funktion zur Ausgabe eines Fehlersignals (S_{stat_ext}) mindestens einer der genannten Vorrichtungen als Fehlersignal (Sₛₜₐₜ).

11. Vorrichtung nach einem der Ansprüche 1 bis 10, **dadurch gekennzeichnet, dass** die Größe des Ausgangsstroms (I₄, I₈) zumindest einer der Ausgänge (3, 4) der Regelschaltung (10) abhängig ist von einer Betriebsspannung (U_{b}) an dem Eingang (1) der Regelschaltung (10) und dass der Ausgangsstrom (I₄, I₈) in zumindest einem Bereich (C, C1, C2) der Betriebsspannung (U_{b}) konstant ist.

12. Vorrichtung nach einem der Ansprüche 1 bis 10, **dadurch gekennzeichnet, dass** die Größe des Summenstroms (I₃ + I₄, I₃ + I₄ + I₈) aus den Ausgangsströmen (I₃, I₄, I₈) mindestens zweier Ausgänge (3, 4) der Regelschaltung (10) abhängig ist von einer Betriebsspannung (U_{b}) an dem Eingang (1) der Regelschaltung (10) und dass der Summenstrom (I₃ + I₄, I₃ + I₄ + I₈) und/oder die Verlustleistung (P_{LED}) des mindestens einen Verbrauchers (11) in zumindest einem Bereich (B, C, C1, C2) der Betriebsspannung (U_{b}) konstant ist, wobei in mindestens einem dieser Bereiche der Betriebsspannung (U_{b}) zumindest einer der Ausgangsströme (I₃, I₄, I₈) nicht konstant ist.

13. Vorrichtung nach einem der Ansprüche 1 bis 12, **dadurch gekennzeichnet, dass** mindestens einer der externen Widerstände (R₃, R₄, R₈) derart thermisch entkoppelt von der Regelschaltung (10) ist, dass sich die Temperatur der Regelschaltung (10) und/oder zumindest eines Teils der Regelschaltung (10) um nicht mehr als 80 °C bzw. 40 °C bzw. 20°C bzw. 10°C erhöht, wenn der besagte mindestens eine externe Widerstand (R₃, R₄, R₈) seine maximal zulässige Betriebstemperatur (T_{R}) erreicht.

14. Vorrichtung nach einem der Ansprüche 1 bis 13, **dadurch gekennzeichnet, dass** in zumindest einem der zulässigen Betriebszustände der Regelschaltung (10) mindestens einer der externen Widerstände (R₃, R₄, R₈) als seine zulässige Betriebstemperatur eine Temperatur (T_{R}) größer als 150 °C bzw. 200 °C bzw. 250 °C bzw. 350 °C bzw. 450 °C erreicht.

15. Vorrichtung nach einem der Ansprüche 1 bis 14, **dadurch gekennzeichnet, dass** der mindestens eine Verbraucher (11) eine LED und/oder eine Gruppe von zumindest teilweise in Serie geschalteten LEDs und/oder eine Gruppe von zumindest teilweise parallel geschalteten LEDs ist oder dass der mindestens eine Verbraucher eine ggf. parasitäre, ohmsche und/oder induktive und/oder kapazitive Last (12, 13, 16) aufweist, wie sie in elektrischen/elektronischen Gegenständen/Komponenten im Automotive-Bereich und/oder des täglichen Lebens für z.B. Wohn- und/oder Industriegebäude, Accessoire, Transport anzutreffen sind.

## Claims

1. An apparatus for supplying at least one consumer with electrical energy or for providing electrical power for at least one consumer from an on-board motor vehicle electrical system, comprising
- a control circuit (10) designed as an IC and having an input (1) by means of which electrical energy can be supplied to the control circuit (10) from the on-board motor vehicle electrical system, and having at least a first output (3) and a second output (4), wherein a consumer (11) can be powered via its first connector with electrical energy from the on-board motor vehicle electrical system by the control circuit (10) via each of said two outputs (3, 4), and respectively the control circuit (10) provides electrical power for a consumer (11) in that the first output (3) of the control circuit (10) is directly connected to the individual consumer (11) and the second output (4) of the control circuit (10) is connected to the same individual consumer (11) via an external resistor,
- at least one external resistor (R₃, R₄, R₈) arranged outside the IC, for emitting possible lost electrical power outside the IC, wherein firstly the external resistor (R₃, R₄, R₈) is connected to the second output (4) of the control circuit (10), and secondly the consumer (11) can be connected to the external resistor (R₃, R₄, R₈),
- wherein the desired value for the electrical power of the consumer (11), which electrical power can be controlled by the control circuit (10), can be prespecified, and
- wherein the dividing of the electrical energy for the consumer (11) and respectively of the electrical power to be provided for said consumer between the at least two outputs (R₃, R₄) of the control circuit (10) can be controlled by said control circuit depending on at least one division parameter (Vₚ), which division parameter can be supplied to the control circuit (10) or be determined in the control circuit (10).

2. The apparatus according to claim 1, **characterized in that** the second output (3, 4) and/or at least one further output (3, 4) of the control circuit (10) has connected to it an external resistor (R₃, R₄, R₈) or respectively a further external resistor (R₃, R₄, R₈), said resistor or resistors being adapted for connection of the consumer thereto, the values of the external resistors (R₃, R₄, R₈) being equal or unequal and/or equal in groups or unequal from group to group.

3. The apparatus according to claim 1 or 2, **characterized in that** the control circuit (10) comprises, for each output (3, 4), a power provision and measurement module comprising a controllable current and/or voltage source and a measurement unit, said measurement unit detecting one or a plurality of parameters representing at least one or a plurality of the electrical values specified hereunder:
- output currents, output voltages and output powers at the outputs (3, 4) of the control circuit (10) and
- supply voltage and supply current of the control circuit (10).

4. The apparatus according to any one of claims 1 to 3, **characterized in that** the electric power of the consumer (11) that is to be controlled can be predefined as a desired sum current to which the sum of the output currents flowing via the outputs (3, 4) can be controlled.

5. The apparatus according to any one of claims 1 to 4, **characterized by** a unit (T) for at least temporarily detecting a temperature, namely of at least one element of the group of the elements specified hereunder:
- the control circuit (10) or a part of the control circuit (10) or the vicinity of the control circuit (10),
- the consumer (11) or the vicinity of the consumer (11),
- at least one of the external resistors (R₃, R₄, R₈) or the vicinity of at least one of the external resistors (R₃, R₄, R₈) and
- a coolant for at least one of the external resistors (R₃, R₄, R₈).

6. The apparatus according to any one of claims 1 to 5, **characterized in that** said at least one of the division parameter (Vₚ) is one of the magnitudes specified hereunder and/or is based on at least one of the magnitudes specified hereunder:
- at least one of the output currents (I₃, I₄, I₈), one of the output voltages (U₃, U₄, U₈), one of the output powers (P₃, P₄, P₈),
- the sum of at least two output currents (E₃, E₄, E₈), output voltages (U₃, U₄, U₈), output powers (P₃, P₄, P₈),
- the operating voltage (U_{b}) of the control circuit (10),
- the temperature (T) of the control circuit (10), a part of the control circuit (10) or the vicinity of the control circuit (10),
- the temperature (T) of a consumer (11) or a part of the consumer (11) or the vicinity of the consumer (11),
- the temperature (T) of at least one external resistor (R₃, R₄, R₈) or the vicinity of at least one of the external resistors (R₃, R₄, R₈),
- the temperature (T) of a cooling medium for at least one of the external resistors (R₃, R₄, R₈),
- a temporarily stored value of at least one of the above specified magnitudes,
- a value derived from at least one of the above specified magnitudes, particularly temporally derived, and
- a value derived from intermediate storage of at least one of the above specified magnitudes, particularly temporally derived.

7. The apparatus according to any one of claims 1 to 6, **characterized in that** the magnitude of the controlled power to be made available to the consumer (11) by the control circuit (10) is dependent on one of the magnitudes specified hereunder:
- at least one of the output currents (I₃, I₄, I₈), one of the output voltages (U₃, U₄, U₈), one of the output powers (P₃, P₄, P₈),
- the sum of at least two output currents (E₃, E₄, E₈), output voltages (U₃, U₄, U₈), output powers (P₃, P₄, P₈),
- the operating voltage (U_{b}) of the control circuit (10),
- the temperature (T) of the control circuit (10), a part of the control circuit (10) or the vicinity of the control circuit (10),
- the temperature (T) of a consumer (11) or a part of the consumer (11) or the vicinity of the consumer (11),
- the temperature (T) of at least one external resistor (R₃, R₄, R₈) or the vicinity of at least one of the external resistors (R₃, R₄, R₈),
- the temperature (T) of a cooling medium for at least one of the external resistors (R₃, R₄, R₈),
- a temporarily stored value of at least one of the above specified magnitudes,
- a value derived from at least one of the above specified magnitudes, particularly temporally derived, and
- a value derived from intermediate storage of at least one of the above specified magnitudes, particularly temporally derived.

8. The apparatus according to any one of claims 1 to 7, **characterized in that** at least one component (RG) is provided for comparing at least one measurement value, a temporarily stored measurement value or a value derived from one of said measurement values to at least one desired value under the aspect of whether said measurement value or said derived value is within or outside a predefinable tolerance range around the desired value, wherein said at least one measurement value or derived value is or is based on one of the magnitudes specified hereunder:
- at least one of the output currents (I₃, I₄, I₈), one of the output voltages (U₃, U₄, U₈), one of the output powers (P₃, P₄, P₈),
- the sum of at least two output currents (E₃, E₄, E₈), output voltages (U₃, U₄, U₈), output powers (P₃, P₄, P₈),
- the operating voltage (U_{b}) of the control circuit (10),
- the temperature (T) of the control circuit (10), a part of the control circuit (10) or the vicinity of the control circuit (10),
- the temperature (T) of a consumer (11) or a part of the consumer (11) or the vicinity of the consumer (11),
- the temperature (T) of at least one external resistor (R₃, R₄, R₈) or the vicinity of at least one of the external resistors (R₃, R₄, R₈),
- the temperature (T) of a cooling medium for at least one of the external resistors (R₃, R₄, R₈),
- a temporarily stored value of at least one of the above specified magnitudes,
- a value derived from at least one of the above specified magnitudes, particularly temporally derived, and
- a value derived from intermediate storage of at least one of the above specified magnitudes, particularly temporally derived.

9. The apparatus according to claim 8, **characterized in that** at least one of said components is an error monitoring component (FD) having the function of error monitoring, said error monitoring component (FD) outputting at least one error signal (Sₛₜₐₜ) signaling an error, or outputting said error signal upon request, wherein the error can be a short circuit or a line or connection interruption.

10. The apparatus according to claim 9, **characterized in that** said at least one error monitoring component (FD) is coupled to an error monitoring component (FD) of another apparatus for supplying at least one consumer with electric energy or power and/or to another apparatus having a different function, so as to output an error signal (S_{stat_ext}) of at least one of said apparatuses as an error signal (Sₛₜₐₜ).

11. The apparatus according to claim 1 to 10, **characterized in that** the magnitude of the output current (I₄, I₈) of at least one of the outputs (3, 4) of the control circuit (10) is dependent on an operating voltage (U_{b}) at the input (1) of the control circuit (10), and that the output current (I₄, I₈) is constant in at least one range (C, C1, C2) of the operating voltage (U_{b}).

12. The apparatus according to any one of claims 1 to 10, **characterized in that** the magnitude of the sum current (I₃+I₄, I₃+I₄+I₈) from the output currents (I₃, I₄, I₈) of at least two outputs (3, 4) of the control circuit (10) is dependent on an operating voltage (U_{b}) at the input (1) of the control circuit (10) and that the sum current (I₃+I₄, I₃+I₄+I₈) and/or the power loss (P_{LED}) of the at least one consumer (11) is constant in at least one range (B, C, C1, C2) of the operating voltage (U_{b}), wherein, in at least one of said ranges of the operating voltage (U_{b}), at least one of the output currents (I₃, I₄, I₈) is not constant.

13. The apparatus according to any one of claims 1 to 12, **characterized in that** at least one of the external resistors (R₃, R₄, R₈) is thermally decoupled from the control circuit (10) in such a manner that the temperature of the control circuit (10) and/or at least of a part of the control circuit (10) does not rise by more than 80°C, 40°C, 20°C and 10°C respectively when said at least one external resistor (R₃, R₄, R₈) reaches its maximum allowable operating temperature (T_{R}).

14. The apparatus according to any one of claims 1 to 13, **characterized in that**, in at least one of the allowable operating states of the control circuit (10), at least one of the external resistors (R₃, R₄, R₈) reaches, as its allowable operating temperature, a temperature (T_{R}) larger than 150°C, 200°C, 250°C, 350°C and 450°C respectively.

15. The apparatus according to any one of claims 1 to 14, **characterized in that** the at least one consumer (11) is an LED and/or an array of LEDs at least partially connected in series, and/or an array of LEDs at least partially connected in parallel, or that the at least one consumer comprises an optionally parasitic, ohmic and/or inductive and/or capacitive load (12, 13, 16) as found in electrical/electronic devices/components in the automotive sector and/or of daily life e.g. for residential and/or industrial buildings, accessories, transport.

## Revendications

1. Dispositif respectivement pour alimenter en énergie électrique au moins un consommateur ayant une première prise ou pour mettre à disposition de la puissance électrique pour au moins un consommateur ayant une première prise, à partir d'un réseau de bord d'un véhicule automobile, comprenant
- un circuit de régulation (10) sous la forme d'un circuit intégré, avec une entrée (1) par laquelle de l'énergie électrique peut être acheminée au circuit de régulation (10) à partir du réseau de bord d'un véhicule automobile, et avec au moins une première sortie (3) et une deuxième sortie (4), un consommateur (11) pouvant être alimenté en énergie électrique, via sa première prise, par le circuit de régulation (10) à partir du réseau de bord d'un véhicule automobile ou, respectivement, le circuit de régulation (10) mettant à disposition de la puissance électrique pour un consommateur (11), via chacune de ces deux sorties (3, 4), par le fait que la première sortie (3) du circuit de régulation (10) est raccordée directement et que la deuxième sortie (4) du circuit de régulation (10) est raccordée via une résistance externe, au même et unique consommateur (11),
- au moins une résistance externe (R₃, R₄, R₈) disposée à l'extérieur du circuit intégré, pour dissiper, à l'extérieur du circuit intégré, une perte potentielle d'énergie électrique, la résistance externe (R₃, R₄, R₈) étant raccordée à la deuxième sortie (4) du circuit de régulation (10), d'une part, et le consommateur (11) pouvant être raccordé à la résistance externe (R₃, R₄, R₈), d'autre part,
- la valeur de consigne de la puissance électrique du consommateur (11), à régler par le circuit de régulation (10), pouvant être prédéterminée et
- la répartition de l'énergie électrique pour le consommateur (11) ou, respectivement, de la puissance électrique à mettre à disposition pour celui-ci, sur lesdites au moins deux sorties (R₃, R₄) du circuit de régulation (10) étant réglable en fonction d'au moins un paramètre de répartition (Vₚ) qui peut être fourni au circuit de régulation (10) ou qui peut être déterminé dans le circuit de régulation (10).

2. Dispositif selon la revendication 1, **caractérisé en ce qu'**est raccordée à la deuxième sortie (3, 4) et/ou à au moins une sortie supplémentaire (3, 4) du circuit de régulation (10), une ou respectivement une résistance externe supplémentaire (R₃, R₄, R₈), à laquelle ou respectivement auxquelles le consommateur peut être raccordé, les valeurs des résistances externes (R₃, R₄, R₈) étant ou n'étant pas les mêmes ou étant les mêmes par groupe ou étant différentes d'un groupe à l'autre.

3. Dispositif selon la revendication 1 ou 2, **caractérisé en ce que** le circuit de régulation (10) comprend, par sortie (3, 4), un module de mise à disposition de puissance et de mesurage de puissance qui comporte une source réglable de courant et/ou de tension et une unité de mesure, l'unité de mesure déterminant un ou plusieurs paramètres qui représente(nt) au moins une ou respectivement plusieurs des grandeurs électriques énoncées ci-après :
- courants de sortie, tensions de sortie et puissances de sortie aux sorties (3, 4) du circuit de régulation (10) et
- tension d'alimentation et courant d'alimentation du circuit de régulation (10).

4. Dispositif selon l'une des revendications 1 à 3, **caractérisé en ce que** la puissance électrique à régler du consommateur (11) peut être prédéterminée sous la forme d'un courant total de consigne par rapport auquel la somme des courants de sortie passant par les sorties (3, 4) est réglable.

5. Dispositif selon l'une des revendications 1 à 4, **caractérisé par** une unité (T) qui saisit au moins temporairement une température d'au moins un élément du groupe des éléments énoncés ci-après :
- du circuit de régulation (10) ou d'une partie du circuit de régulation (10) ou avoisinant au circuit de régulation (10),
- du consommateur (11) ou avoisinant au consommateur (11),
- d'au moins une des résistances externes (R₃, R₄, R₈) et à proximité d'au moins une des résistances externes (R₃, R₄, R₈) et
- d'un réfrigérant pour au moins une des résistances externes (R₃, R₄, R₈).

6. Dispositif selon l'une des revendications 1 à 5, **caractérisé en ce que** ledit au moins un paramètre de répartition (Vₚ) est une des grandeurs énoncées ci-après et/ou est basé sur une des grandeurs énoncées ci-après :
- au moins un des courants de sortie (I₃, I₄, I₈), une des tensions de sortie (U₃, U₄, U₈), une des puissances de sortie (P₃, P₄, P₈),
- la somme d'au moins deux courants de sortie (E₃, E₄, E₈), tensions de sortie (U₃, U₄, U₈), puissances de sortie (P₃, P₄, P₈),
- la tension de fonctionnement (U_{b}) du circuit de régulation (10),
- la température (T) du circuit de régulation (10), d'une partie du circuit de régulation (10) ou à proximité du circuit de régulation (10),
- la température (T) d'un consommateur (11) ou d'une partie du consommateur (11) ou à proximité du consommateur (11),
- la température (T) d'au moins une résistance externe (R₃, R₄, R₈) ou à proximité d'au moins une résistance externe (R₃, R₄, R₈),
- la température (T) d'un réfrigérant pour au moins une des résistances externes (R₃, R₄, R₈),
- une valeur provisoirement sauvegardée d'au moins une des grandeurs énoncées ci-avant,
- une valeur dérivée, notamment dérivée temporellement, d'au moins une des grandeurs énoncées ci-avant et
- une valeur dérivée, notamment dérivée temporellement, d'au moins une des valeurs provisoirement sauvegardées d'une des grandeurs énoncées ci-avant.

7. Dispositif selon l'une des revendications 1 à 6, **caractérisé en ce que** le montant de la puissance réglée à mettre à disposition du consommateur (11) par le circuit de régulation (10) est fonction de l'une des grandeurs énoncées ci-après :
- au moins un des courants de sortie (I₃, I₄, I₈), une des tensions de sortie (U₃, U₄, U₈), une des puissances de sortie (P₃, P₄, P₈),
- la somme d'au moins deux courants de sortie (E₃, E₄, E₈), tensions de sortie (U₃, U₄, U₈), puissances de sortie (P₃, P₄, P₈),
- la tension de fonctionnement (U_{b}) du circuit de régulation (10),
- la température (T) du circuit de régulation (10), d'une partie du circuit de régulation (10) ou à proximité du circuit de régulation (10),
- la température (T) d'un consommateur (11) ou d'une partie du consommateur (11) ou à proximité du consommateur (11),
- la température (T) d'au moins une résistance externe (R₃, R₄, R₈) ou à proximité d'au moins une résistance externe (R₃, R₄, R₈),
- la température (T) d'un réfrigérant pour au moins une des résistances externes (R₃, R₄, R₈),
- une valeur provisoirement sauvegardée d'au moins une des grandeurs énoncées ci-avant,
- une valeur dérivée, notamment dérivée temporellement, d'au moins une des grandeurs énoncées ci-avant et
- une valeur dérivée, notamment dérivée temporellement, d'au moins une des valeurs provisoirement sauvegardées d'une des grandeurs énoncées ci-avant.

8. Dispositif selon l'une des revendications 1 à 7, **caractérisé en ce qu'**il est prévu au moins une composante (RG) qui compare au moins une valeur mesurée, une valeur mesurée provisoirement sauvegardée ou une valeur dérivée de l'une de ces valeurs mesurées avec au moins une valeur de consigne dans de sens de vérifier si la valeur mesurée ou la valeur dérivée est à l'intérieur ou à l'extérieur d'une plage de tolérance susceptible d'être prédéterminée, autour de la valeur de consigne, ladite au moins une valeur mesurée ou dérivée étant une des grandeurs énoncées ci-après ou étant basée sur celle-ci :
- au moins un des courants de sortie (I₃, I₄, I₈), une des tensions de sortie (U₃, U₄, U₈), une des puissances de sortie (P₃, P₄, P₈),
- la somme d'au moins deux courants de sortie (E₃, E₄, E₈), tensions de sortie (U₃, U₄, U₈), puissances de sortie (P₃, P₄, P₈),
- la tension de fonctionnement (U_{b}) du circuit de régulation (10),
- la température (T) du circuit de régulation (10), d'une partie du circuit de régulation (10) ou à proximité du circuit de régulation (10),
- la température (T) d'un consommateur (11) ou d'une partie du consommateur (11) ou à proximité du consommateur (11),
- la température (T) d'au moins une résistance externe (R₃, R₄, R₈) ou à proximité d'au moins une résistance externe (R₃, R₄, R₈),
- la température (T) d'un réfrigérant pour au moins une des résistances externes (R₃, R₄, R₈),
- une valeur provisoirement sauvegardée d'au moins une des grandeurs énoncées ci-avant,
- une valeur dérivée, notamment dérivée temporellement, d'au moins une des grandeurs énoncées ci-avant et
- une valeur dérivée, notamment dérivée temporellement, d'au moins une des valeurs provisoirement sauvegardées d'une des grandeurs énoncées ci-avant.

9. Dispositif selon la revendication 8, **caractérisé en ce qu'**au moins une des composantes est une composante de surveillance d'erreurs (FD) avec une fonction de télésurveillance, qui émet, ou émet sur demande, au moins un signal d'erreur (Sₛₜₐₜ) signalant une erreur, l'erreur pouvant être un court-circuit ou une interruption de ligne ou de connexion.

10. Dispositif selon la revendication 9, **caractérisé en ce que** ladite au moins une composante de surveillance d'erreurs (FD) peut être reliée à une composante de surveillance d'erreurs (FD) d'un autre dispositif pour alimenter en énergie ou puissance électrique au moins un consommateur et/ou à un autre dispositif ayant une autre fonction, pour émettre un signal d'erreur (S_{stat_ext}) d'au moins un des dispositifs énoncés comme signal d'erreur (Sₛₜₐₜ).

11. Dispositif selon l'une des revendications 1 à 10, **caractérisé en ce que** l'intensité du courant de sortie (I₄, I₈) d'au moins une des sorties (3, 4) du circuit de régulation (10) est fonction d'une tension de fonctionnement (U_{b}) à l'entrée (1) du circuit de régulation (10) et **en ce que** le courant de sortie (I₄, I₈) est constant dans au moins une plage (C, C1, C2) de la tension de fonctionnement (U_{b}).

12. Dispositif selon l'une des revendications 1 à 10, **caractérisé en ce que** la valeur du courant total (I₃ + I₄, I₃ + I₄ + I₈) des courants de sortie (I₃, I₄, I₈) d'au moins deux sorties (3, 4) du circuit de régulation (10) est fonction d'une tension de fonctionnement (U_{b}) à l'entrée (1) du circuit de régulation (10) et **en ce que** le courant total (I₃ + I₄, I₃ + I₄ + I₈) et/ou la puissance dissipée (P_{LED}) dudit au moins un consommateur (11) est constant dans au moins une plage (B, C, C1, C2) de la tension de fonctionnement (U_{b}), dans au moins une de ces plages de la tension de fonctionnement (U_{b}), au moins un des courants de sortie (I₃, I₄, I₈) n'étant pas constant.

13. Dispositif selon l'une des revendications 1 à 12, **caractérisé en ce qu'**au moins une des résistances externes (R₃, R₄, R₈) est thermiquement découplée du circuit de régulation (10) de façon telle que la température du circuit de régulation (10) et/ou d'au moins une partie du circuit de régulation (10) n'augmente pas de plus de 80 °C ou de 40 °C ou de 20 °C ou de 10 °C, lorsque ladite au moins une résistance externe (R₃, R₄, R₈) atteint sa température maximale autorisée de fonctionnement (T_{R}).

14. Dispositif selon l'une des revendications 1 à 13, **caractérisé en ce que** dans au moins un des états de fonctionnement du circuit de régulation (10), au moins une des résistances externes (R₃, R₄, R₈) atteint comme température maximale autorisée de fonctionnement une température (T_{R}) supérieure à 150 °C ou 200 °C ou 250 °C ou 350 °C ou 450 °C.

15. Dispositif selon l'une des revendications 1 à 14, **caractérisé en ce que** ledit au moins un consommateur (11) est une diode électroluminescente et/ou un groupe de diodes électroluminescentes au moins partiellement connectées en série et/ou un groupe de diodes électroluminescentes au moins partiellement connectées en parallèle ou **en ce que** ledit au moins un consommateur comprend une charge éventuellement parasitaire, ohmique et/ou inductive et/ou capacitive (12, 13, 16) telle que l'on la trouve dans des appareils/composantes électriques/électroniques du domaine de la construction automobile et/ou de la vie courante, par exemple pour des immeubles d'habitation et/ou d'industrie, des accessoires, du transport.
